# DEMANDE DE BREVET EUROPEEN

(11) **EP 3 666 987 A1**
(43) Date de publication de la demande: **17.06.2020**
(21) Numéro de dépôt: 18211803.4
(22) Date de dépôt: 11.12.2018
(51) Int. Cl.: E04B 1/35, E04B 1/74

(54) **COQUE SOUS VIDE POUR BÂTIMENT AUTOSTABLE, AUTO-ISOLANT, FLOTTANT, ANTISISMIQUE ET SEMI-MOBILE**

(71) Demandeur: Chavanne, Bruno, 37310 Azay-sur-Indre (FR)
(72) Inventeur: Chavanne, Bruno, 37310 Azay-sur-Indre (FR)

(57) **Abrégé**

Coque de bâtiment composée d'un volume global (OS) constitué d'une pluralité de plaques rigides jointives formant une peau externe étanche qui englobe tout le bâtiment et de sous-volumes (IS) du volume global (OS) ou pièces d'habitation ou d'accueil, également constitués d'une pluralité de plaques rigides jointives formant une ou des peaux internes étanches. Le volume complémentaire dudit ou desdits sous-volumes (IS) par rapport au dit volume global (OS) est mis sous vide de tout gaz (3), cette mise sous vide permettant de rigidifier et de rendre isolante ladite coque. Chaque sous-volume est isolé physiquement, phoniquement, thermiquement, indépendamment des autres sous-volumes au sein du volume global.

## Description

L'invention se situe dans le domaine de la production industrielle en série de bâtiments d'habitation et d'accueil à haut niveau d'isolation thermique, phonique, sismique, électromagnétique, et aux infiltrations d'eau ; sans utilisation de béton, montables et démontables à l'infini.

Il est démontré que la production et l'utilisation du béton engendre entre 5 et 6 % des émissions de gaz à effet de serre anthropique dans le monde. De plus, les réserves de sable à grains anguleux se raréfient.

On connaît le problème des habitations construites en dur à une époque ou leur environnement était sain et agréable, condamnées à être détruites suite à une dégradation environnementale. Le bâtiment n'est pas récupérable et sa démolition produit des déchets polluants.

Le problème des habitations non isolées et dont la rénovation coûteuse ne donne pas entière satisfaction est connu.

On constate qu'à long terme, certains matériaux exposés à l'air et aux rayonnements solaires se dégradent par oxydation et photo-oxydation. L'humidité et le gel les dégradent également.

Les habitations construites en zone inondable et/ou sismique et qui ne résistent ni aux entrées d'eau, ni aux séismes, entraînent des indemnisations assurantielles catastrophiques.

On soupçonne un effet néfaste sur la santé à long terme des rayonnements électromagnétiques qui envahissent les habitations.

La présente invention propose de remédier à ces problèmes et se réfère au domaine technique des constructions de bâtiments préfabriqués et mobiles par démontage et remontage. Elle se réfère plus particulièrement à la fabrication d'une structure de bâtiment à isolations thermique et phonique intégrées de type coque dite en cocon.

Tous les volumes constituant les isolations thermique et phonique du bâtiment sont reliés entre eux et forment un cocon.

Une structure de bâtiment de ce type est généralement constituée de trois couches agencées en « sandwich » : Il s'agit premièrement, d'une peau externe constituée de panneaux rigides jointifs ; deuxièmement, d'une couche intermédiaire en matériaux d'isolation thermique qui constitue une « rupture thermique » ; et troisièmement, d'une peau interne également constituée de panneaux rigides jointifs.

La présente invention se caractérise par une couche intermédiaire isolante constituée à 99,5 % de vide de matière solide, à 100 % de vide de matière liquide et à 99,999 % de vide de gaz.

L'utilisation de panneaux d'isolation sous vide (P.I.V.), incorporés ou non dans les murs, les planchers et les couvertures est connue.

Les panneaux P.I.V. ont l'inconvénient d'être fragiles, donc non porteurs. Cela rend obligatoire l'ajout d'une structure porteuse qui n'est pas isolante. Les ponts thermiques entre l'extérieur et l'intérieur du bâtiment sont inévitables. De plus, il est difficile de contrôler le niveau de vide à long terme des panneaux P.I.V., à 10, 30, 100 ans et plus.

Pour rappel, on sait que la meilleure isolation thermique qui soit est le vide de tout gaz. Afin de rigidifier, de rendre plus solide, d'économiser des matériaux et d'insonoriser la structure du bâtiment, l'invention utilise un effet physique : l'effet dit de Magdebourg.

Quand un volume est sous vide de tout gaz, la force exercée sur les parois de ce volume est égale à la pression atmosphérique, soit 1013 hPa ou mbar au niveau de la mer. Cette force va être utilisée dans la totalité de la coque ou structure de la présente invention.

Dans la présente invention, la couche intermédiaire isolante de la coque qui forme un cocon est constituée principalement de vide de matière solide et liquide et de tout gaz. La pression atmosphérique va donc s'exercer sur la totalité des parois constituant la coque.

Afin d'empêcher que les parois sur lesquelles s'exerce la pression atmosphérique ne s'incurvent vers l'intérieur du volume sous vide, lesdites parois vont être pré-cintrées. Les cintrages étant dirigés vers l'intérieur de la structure « sandwich » ou volume sous vide.

Afin de garder un écartement constant entre les parois tout en créant un minimum de ponts thermiques, il sera placé entre les deux parois à intervalles réguliers des colonnes sensiblement cylindriques. Les colonnes étant de faible section par rapport à leur hauteur, leur volume est réduit par rapport au volume global de la coque. Ce volume des colonnes très contenu limitera la transmission des flux thermiques par conduction. L'ensemble du volume intérieur de la coque et les colonnes cylindriques seront soumis à un vide de gaz poussé, ce qui supprimera la transmission des flux thermiques par convection.

Le volume interne de la coque constitué principalement de vide sera donc la couche isolante de la structure « sandwich ».

Précision sémantique : le terme coque désigne en architecture des voiles de béton généralement courbes. Le terme coque utilisé dans la présente demande englobe les volumes de l'assise, des murs extérieurs, de la couverture, des murs de refend et des planchers intermédiaires. Ce terme désigne donc la totalité des volumes structurels du bâtiment.

La demande WO2017162388 décrit deux enveloppes, l'une interne, l'autre externe, renfermant un matériau d'isolation de type granules sphériques poreux et rigides. Les granules sont versés en vrac sans aucun liant et n'ont donc que de faibles points de contact entre eux, ce qui limite la transmission des flux thermiques par conduction.

Afin d'améliorer l'isolation ainsi que la rigidité de la structure ou coque du bâtiment, cette demande de brevet propose de mettre sous vide d'air l'ensemble du volume de granules ainsi que les enveloppes composées de panneaux rigides jointifs grâce à une peau étanche.

Tous les panneaux rigides constituant les enveloppes présentent sur leur face interne des reliefs sous forme de nervures. En cas de rupture accidentelle du vide d'air, la rigidité de la coque est en partie conservée grâce à ces nervures intérieures.

L'encastrement des nervures dans les granules rigides assure le contreventement de la structure.

Dans la demande WO2017162388, il est proposé plus précisément que la totalité de la superstructure d'un bâtiment soit composée d'une unique coque continue isolante, dite en cocon, et que tous les éléments soient de composition identique. Les murs de refend et les planchers sont de la même composition que la coque. Un élément ne peut être qualifié de mur, de plancher, de toit, que par sa position dans l'espace et par rapport aux autres éléments. La structure de cette coque est constituée d'une pluralité de plaques rigides jointives enserrant des granules légers poreux, rigides et sphériques, qui remplissent la totalité du volume formé par les plaques. Le volume global de la superstructure est constitué d'une pluralité de plaques rigides jointives formant une enveloppe externe qui englobe tout le bâtiment. Les pièces d'habitation ou d'accueil forment des sous-volumes dont les parois sont constituées par une pluralité de plaques rigides jointives formant des cavités internes. L'étanchéité de la coque unique, dite en cocon, est assurée par une peau étanche qui forme une sur-enveloppe globale.

Les sous-volumes, qui sont des unités isolées, et qui constituent les pièces d'habitation ou d'accueil, sont immergés dans les granules.

La présente demande, qui est une refonte de la demande de brevet WO2017162388, se propose de supprimer les granules poreux rigides et durs dont la production est coûteuse en matériel de production ainsi qu'en énergie primaire consommée. La couche intermédiaire isolante est volumineuse et constitue la majeure partie du volume global de la structure, d'où le coût prohibitif des granules.

### Résumer de l'invention

Coque de bâtiment autostable, thermo-isolante, phono-isolante, sismo-isolante, aqua-isolante, électromagnéto-isolante, constituée d'un volume global formé par une pluralité de plaques rigides jointives formant une peau externe étanche qui englobe tout le bâtiment et d'un ou plusieurs sous-volumes ou pièces d'habitation ou d'accueil, également constitués par une pluralité de plaques rigides jointives formant des peaux internes étanches.

A l'intérieur du volume complémentaire du ou des sous-volumes par rapport au volume global sont disposés à intervalles réguliers des colonnes sensiblement cylindriques reliant les plaques rigides jointives étanches dudit volume global avec les plaques rigides jointives étanches dudit ou desdits sous-volumes.

Le volume complémentaire dudit ou desdits sous-volumes par rapport au dit volume global est mis sous vide de tout gaz, cette mise sous vide permettant de rigidifier et de rendre isolante ladite coque, chaque sous-volume étant isolé physiquement, phoniquement et thermiquement, indépendamment des autres sous-volumes au sein du volume global.

Le vide de gaz est contrôlé à vie par une pompe à vide installée in situ. La peau externe et les parois sont contreventées par la pression atmosphérique qui s'exerce sur elles ainsi que sur les colonnes sensiblement cylindriques.

L'ensemble de la coque ou bâtiment, sans ancrage dans le sol, formant un objet indépendant du sol sur lequel il repose, est donc antisismique. Si un vide sanitaire ou sous-sol formant un volume étanche suffisamment haut est prévu, la coque est également flottante en cas d'inondation.

### Exposé des problèmes à résoudre

Le premier problème à résoudre est le maintien, à une distance fixée à l'avance, des panneaux rigides en miroir des deux peaux constituant le volume global et les sous-volumes.

Afin de conserver un écartement constant entre les deux panneaux et rigidifier l'ensemble, on utilise généralement des parois internes ou entretoises pleines ou ajourées fixées orthogonalement sur les faces internes des deux panneaux, qui les réunissent pour former des panneaux creux de plus grande épaisseur. Ces panneaux creux généralement très rigides et résistants, peuvent être utilisés comme murs porteurs. Ce n'est pas la solution qui va être utilisée dans la présente demande car ces entretoises de grande section sont source de ponts thermiques.

Afin de limiter les ponts thermiques, les parois transversales ou entretoises seront remplacées par des colonnes isolantes rigides et dures de faible section.

Le deuxième problème à résoudre est la rigidité intrinsèque des panneaux minces. Pour cela, il est habituel d'ajouter des nervures de renfort. Les nervures de renfort peuvent être formées par les ondulations des panneaux, en forme de trapèzes ou de sinusoïdes. Ces nervures sont transversales et orthogonales aux cotés des panneaux. Dans la présente demande, les nervures de renfort seront formées par des excroissances des bandes de tôle dont les plaques sont composées.

Ces nervures feront office de chaînages car elles seront reliées entre elles par leurs extrémités d'un panneau à l'autre.

Le troisième problème à résoudre est la jonction et le positionnement d'une paroi par rapport à l'autre dans les angles, les angles étant le plus souvent droits. Les rives des panneaux seront relevées suivant un angle saillant ou rentrant. Les bords ainsi relevés seront pressés l'un contre l'autre, formant ainsi la jonction des parois.

Le quatrième problème à résoudre est la jonction des panneaux entre eux quand ils sont alignés dans le même plan. Les rives des panneaux seront également relevées suivant un angle saillant ou rentrant. Les bords ainsi relevés seront pressés l'un contre l'autre, formant ainsi la jonction des panneaux.

Le cinquième problème à résoudre est d'avoir une structure dont l'assemblage ne doit comporter aucun assemblage par collage ni soudage. L'assemblage doit rester démontable. Les pièces constituant la structure ne doivent pas être dégradées par les démontages. Les plaques ne doivent pas comporter de perçages destinés au vissage ou au boulonnage, car elles doivent être étanches. L'assemblage s'effectuera donc par le pincement entre elles des bordures relevées des panneaux rigides telles que décrites précédemment et par le boulonnage entre elles des nervures faisant office de chaînages.

Le sixième problème à résoudre est de limiter l'effondrement de la structure sur elle-même par la pression atmosphérique qui s'exerce sur toutes ses surfaces extérieures à cause du vide d'air intégré à ladite structure. Les plaques pourraient s'incurver entre les colonnes et ainsi rétrécir en longueur et en largeur. Afin de pallier ce problème, les plaques seront pré-cintrées entre chaque colonne.

Le septième problème à résoudre est le maintien de la rigidité de l'ensemble de la structure en cas de rupture de vide d'air. Cette rigidité est surtout critique en cas de rupture ou d'absence de vide d'air, car la structure est parfaitement rigide sous vide puisque soumise à la pression atmosphérique. Cette rigidité sera conservée par l'ajout de câbles de liaison des plaques en miroir entre elles.

Le huitième problème à résoudre consiste à supprimer toute trace d'humidité dans la couche isolante. Le vide poussé transformera l'humidité en vapeur car il fait bouillir l'eau à température ambiante.

### Composition de la coque

L'invention propose que la totalité de la structure d'un bâtiment soit composée d'une unique coque continue isolante, dite en cocon, et que tous les éléments soient de composition identique. Les murs de refend et les planchers sont de la même composition que la coque, ils font partie de la coque. Un élément ne peut être qualifié de mur, de plancher, de toit, que par sa position dans l'espace et par rapport aux autres éléments. La structure de cette coque est constituée d'une pluralité de plaques rigides jointives étanches enserrant des colonnes sensiblement cylindriques disposées à intervalles réguliers. Le volume global de la structure est formé par une pluralité de plaques rigides jointives étanches formant une peau externe qui englobe tout le bâtiment. Les pièces d'habitation ou d'accueil forment des sous-volumes dont les parois sont constituées par une pluralité de plaques rigides jointives étanches formant des cavités internes. Le volume de la coque résulte de la soustraction des sous-volumes au volume global. Son épaisseur est déterminée par la position des sous-volumes dans le volume global.

### Listage des figures

Le descriptif détaillé et explicatif des figures a été placé de la page 12 à la page 19 pour une meilleure concision.
Figure 1 : Vue d'un bâtiment avec son volume global composé d'une peau externe (OS, outer skin), avec ses sous-volumes composés de peaux internes (IS, inner skin) et avec sa pompe à vide (3).
Figure 2 : Zoom sur la pompe à vide et sur l'unique prise de vide.
Figure 3 : Vue d'un bâtiment ouvert sans son mur de pignon.
Figure 4 : Vue d'un bâtiment flottant en partie enterré.
Figure 5 : Vue d'une pièce intérieure avec cinq plaques assemblées.
Figure 6 : Zoom sur la bordure d'assemblage et d'étanchéité d'une plaque de pièce intérieure.
Figure 7 : Zoom à l'intérieur des cinq plaques assemblées de la figure 5.
Figure 8 : Zoom sur l'avant des cinq plaques assemblées de la figure 5.
Figure 9 : Coupe des bordures d'assemblage de deux plaques intérieures.
Figure 10 : Vue en perspective de deux bordures de plaques intérieures.
Figure 11 : Vue d'une colonne en verre cellulaire avec coupe partielle.
Figure 11a : Vue d'une colonne en verre cellulaire ou en fibres végétales.
Figure 12 : Section de l'assemblage de deux plaques avec leurs colonnes.
Figure 13 : Assemblage de cinq plaques intérieures avec leurs colonnes.
Figure 14 : Assemblage de deux plaques intérieure et extérieure.
Figure 15 : Section brisée montrant la disposition relative des bordures.
Figure 16 : Vue montrant l'assemblage de cinq plaques intérieures avec quatre plaques extérieures reliées par des colonnes cylindriques.
Figure 17 : Vue montrant les plaques extérieures assemblées.
Figure 18 : Vue de la partie arrière de la figure 16.
Figure 19 : Coupe des bordures de deux plaques extérieures.
Figure 20 : Vue d'une plaque extérieure et d'une plaque intérieure comprenant deux ouvertures faisant office d'embrasure de baie.
Figure 21 : Vue d'une unité d'habitation comprenant une embrasure de baie dans une paroi.
Figure 22 : Zoom sur l'embrasure de la figure 21.
Figure 23 : Cadre d'embrasure de baie.
Figure 24 : Figure identique à la figure 20 avec le cadre d'embrasure.
Figure 25 et 25a : Vue en coupe d'un demi cadre et zoom sur la coupe.
Figure 26 : Vue de deux câbles de liaison des plaques entre elles.
Figure 26a : Zoom sur deux câbles et leurs ancrages.
Figure 27 : Vue aérienne des deux câbles de liaison de la figure 26.
Figure 28 et 28a : Sections des profilés et de la soudure d'une nervure.
Figure 29: Vue d'un profilé constitué d'un alignement de pyramides.
Figure 29a : Section de la tôle emboutie constituant le profilé.
Figure 29b : Zoom sur les trous de fixation des panneaux de doublage.
Figure 30 : Vue d'un panneau de doublage fixé sur une paroi intérieure.
Figure 30a : Zoom sur la fixation des panneaux par des têtes de vis.
Figure 31 : Profilage et emboutissage concave et convexe de la tôle.

### Description de l'invention

Pour rappel, l'invention propose que la totalité de la structure d'un bâtiment soit composée d'une unique coque continue isolante, dite en cocon, et que tous les éléments soient de composition identique, y compris les murs de refend et les planchers.

Un élément ne peut être qualifié de mur, de plancher, de toit, que par sa position dans l'espace et par rapport aux autres éléments.

La structure de cette coque est constituée d'un volume global (OS) et de pièces d'habitation (IS) soutenues par des colonnes de verre cellulaire moulé ou de fibres de bois agglomérées sous haute pression.

Le volume global de la structure est formé par une peau externe (OS, outer skin) composée d'une pluralité de plaques rigides jointives étanches. C'est également l'enveloppe externe rigide de la coque. Les pièces d'habitation ou d'accueil sont des sous-volumes formés par des peaux internes (IS, inner skin) et qui sont constituées par une pluralité de plaques rigides jointives étanches formant des cavités internes.

Le volume de la coque, résulte de la soustraction des sous-volumes (IS) au volume global (OS).

L'épaisseur de la coque, qui peut varier, est déterminée par la position des sous-volumes dans le volume global.

La coque est le volume complémentaire du ou des sous-volumes par rapport au volume global. Ou bien, en langage booléen, le complémentaire du ou des sous-volumes par rapport au volume global.

Les sous-volumes, qui sont des unités isolées, constituent les pièces d'habitation ou professionnelles. Les sous-volumes sont soutenus et positionnés par les colonnes de verre cellulaire ou de fibres de bois.

Les plaques sont planes ou arrondies, parallèles entre elles ou non. Une plaque peut avoir la taille d'un pan de mur ou d'un pan de toit ou d'un plancher.

Afin de rigidifier les plaques, et afin qu'elles ne s'incurvent pas vers l'intérieur de la coque sous l'effet de la dépression, celles-ci sont entièrement embouties suivant des reliefs structurés en quadrillage dont chaque carré est constitué d'une pyramide inversée, donc concave.

A l'intérieur de la coque, la jonction des coins de quatre pyramides adjacentes forme un creux à huit faces dans lequel chaque extrémité de colonne vient s'encastrer, évitant ainsi une fixation mécanique.

Deux pyramides inversées en miroir sont donc étayées par les quatre quarts de colonne situés aux quatre coins de chaque pyramide.

La dépression exercée par le vide sur les quatre faces de la pyramide va étirer le métal. Cette traction va être contrecarrée par les quatre côtés de la base de chaque pyramide qui, avec les quatre côtés des bases des pyramides adjacentes, forment des profilés anguleux.

Ce sont donc les liaisons des côtés des bases des pyramides qui vont s'opposer à la force exercée sur le métal par la dépression.

De plus, sur deux côtés sur quatre de chaque pyramide, sont ajoutées des nervures à profil en T grâce à l'excroissance de la tôle, renforçant ainsi les deux profilés anguleux formés par les quatre côtés adjacents deux par deux des bases des pyramides.

Indirectement, la dépression sera également contrecarrée par les nervures à profil en T issues de l'excroissance des pyramides.

La direction des nervures sera verticale dans le cas d'un mur vertical ou d'un pan de toit sur lequel s'exerce la force de gravité.

Les nervures des plaques adjacentes font office de chaînage car leurs extrémités sont reliées par des platines et par les bordures relevées et étanches des plaques. Quatre nervures reliées autour d'une pièce d'habitation vont ceinturer ce volume et donc être équivalentes aux quatre segments rectilignes d'un chaînage.

Un chaînage est habituellement noyé dans le béton, les chaînages tels qu'exposés ici étant situés à l'extérieur du volume de la coque. Ils peuvent également être désignés par le terme ceinturage.

Les embrasures nécessaires à la création des baies de portes et de fenêtres, au passage d'une pièce à une autre pièce, au passage des aérations, des conduits de fumée, des gaines électriques et hydrauliques, sont ménagées dans les plaques se faisant face.

Une embrasure peut être de forme cylindrique pour le passage des tuyaux et des câbles.

Les rives des plaques sont pliées vers l'extérieur de la coque. Les bords sont ainsi relevés et forment avec les plans des plaques, soit un angle en V fermé, soit un angle en V ouvert.

Ces pliages sont destinés à relier les plaques entre elles par le pincement des couples de bordures relevées qui sont en contact.

Les pliages en V fermé sont destinés à relier les plaques dont les faces extérieures de la coque forment un angle saillant entre elles.

Les pliages en V ouvert sont destinés à relier les plaques dont les faces extérieures de la coque forment un angle rentrant entre elles.

Les rives ou bordures en V fermé et en V ouvert des plaques sont réunies par le pressage de mâchoires. Une couche d'étanchéité en métal ductile, généralement du plomb, sera placée entre les couples de bordures, rendant étanche l'assemblage des plaques.

Les lignes médianes des deux bordures en contact seront dotées de renflements symétriques rendant possible le stockage d'un joint de mastic à texture plastique. Cette réserve de mastic permettra d'obstruer tout interstice résiduel qui aurait favorisé l'introduction d'air.

Ainsi l'ensemble de la coque ou structure est-il couvert par une peau étanche aux gaz. Ainsi les intérieurs des sous-volumes, donc des pièces d'habitation, sont-ils couverts par des peaux étanches aux gaz.

La peau externe et les peaux internes sont reliées par des cadres étanches ceinturant chaque embrasure.

Le volume fermé et étanche aux gaz, délimité par les plaques et les cadres, est soumis à un vide poussé, inférieur à 1 hPa. La mise sous vide de gaz complète se fera quand les molécules de gaz enfermées dans les différents matériaux du volume fermé seront éliminées.

C'est pourquoi le volume interne de la coque est relié à une pompe à vide de façon permanente. La pompe à vide est équipée d'un système de détection et d'alarme afin de prévenir tout fonctionnement de ladite pompe, signe d'une entrée d'air accidentelle dans le volume fermé et étanche de la coque.

Ce système de contrôle sera relié au réseau informatique mondial par réseau filaire ou hertzien. L'étanchéité du volume étanche sera ainsi surveillée. Cette liaison permanente au réseau informatique mondial constitue une alarme à toute agression extérieure sur la coque de type effraction. Un vacuomètre mécanique de sécurité indiquera le niveau de vide en permanence.

Le vide de gaz assure la rigidité de l'ensemble par effet dit de Magdebourg. Les planchers étant rigidifiés, ils ne peuvent pas vibrer et sont donc aussi silencieux qu'un plancher en béton. La conductivité thermique de la coque est inférieure à 0,004 watt/ (mètre. °K).

La qualité optimale de l'isolation thermique sera maintenue durant toute la durée de vie du bâtiment grâce à la pompe à vide.

En zone sismique, la coque est posée sur un lit de sable qui permet d'absorber tous les mouvements ou les secousses du sol. La hauteur du sable est en fonction de l'aléa sismique. Ce lit de sable s'étend sur une surface plus grande de 20 % que la surface d'appui de la coque. Il est particulièrement avantageux d'utiliser des sables impropres à la fabrication du béton, de type sable du désert. Les grains de sable du désert étant arrondis, ils ne sont que plus appropriés à l'absorption des mouvements ou secousses du sol.

Les plaques rigides sont extrudées et/ou laminées et/ou moulées dans une matière stratifiée ou non, d'origine minérale et/ou végétale et/ou pétrochimique. Les nervures à profil en T sont intégrées à la fabrication des plaques dès leur profilage et leur emboutissage.

Les colonnes ou entretoises cylindriques sont constituées de verre cellulaire ou de fibres végétales compressées à 350 bars ou 35 MPa. Une couche de résine polyester chargée de fibres de verre enrobe la surface extérieure de ces colonnes afin d'améliorer leur résistance.

Les nervures permettent la pose de tous les parements extérieurs, panneaux de doublage intérieurs, panneaux photovoltaïques, façades végétales. Les nervures seront perforées de trous oblongs dès leur fabrication afin de fixer lesdits panneaux. L'espace entre les panneaux de doublage et les plaques de la coque permet le passage des circuits d'eau, d'électricité, de ventilation et des réseaux intranet et internet.

Tous les matériaux accumulateurs thermiques peuvent être utilisés à l'intérieur des sous-volumes (IS). Tous les matériaux réfléchissant les rayons du soleil peuvent être utilisés à l'extérieur du volume (OS).

La coque sera goudronnée dans sa partie inférieure avant sa pose.

En zone inondable, les portes et portes-fenêtres s'ouvriront vers l'extérieur et seront étanches aux infiltrations d'eau ainsi que les entrées de tuyaux. Un anti-retour sera installé à la sortie de chaque évacuation des eaux usées. L'étanchéité sera assurée jusqu'à la plus haute crue historiquement constatée. En cas d'inondation, seule la partie inférieure des parements extérieurs sera noyée dans l'eau.

Le bâtiment est ainsi aqua-isolant.

Si le vide sanitaire ou sous-sol étanche est suffisamment haut et l'assise du bâtiment consolidée par un mur de refend en son milieu, le bâtiment est flottant en cas de montée des eaux.

### Remarques générales

L'ensemble de la structure reste réparable, démontable, modifiable et transférable sur un autre lieu. Ainsi, la valeur financière du bâtiment n'est plus conditionnée par la qualité du lieu d'implantation. Sa valeur reste stable. L'habitation est semi-mobile car elle peut être déplacée après démontage et remontage. Une fois le bâtiment démonté, le terrain redevient vierge de toute construction.

Les colonnes-entretoises peuvent être fabriquées dans n'importe quelle matière isolante et résistante d'origine végétale ou minérale.

Un seul orifice d'aspiration des gaz est nécessaire et suffisant pour la totalité de la structure. La pompe à vide est placée avantageusement à l'intérieur du bâtiment.

La mise sous vide d'un groupe de bâtiments peut être en réseau, une seule pompe à vide faisant le vide d'air d'une pluralité de coques.

Les plaques rigides sont avantageusement fabriquées avec des bobines ou des feuilles métalliques, notamment en aluminium ou en acier. Un tel bâtiment est électromagnétiquement isolant.

### Descriptif explicatif des figures

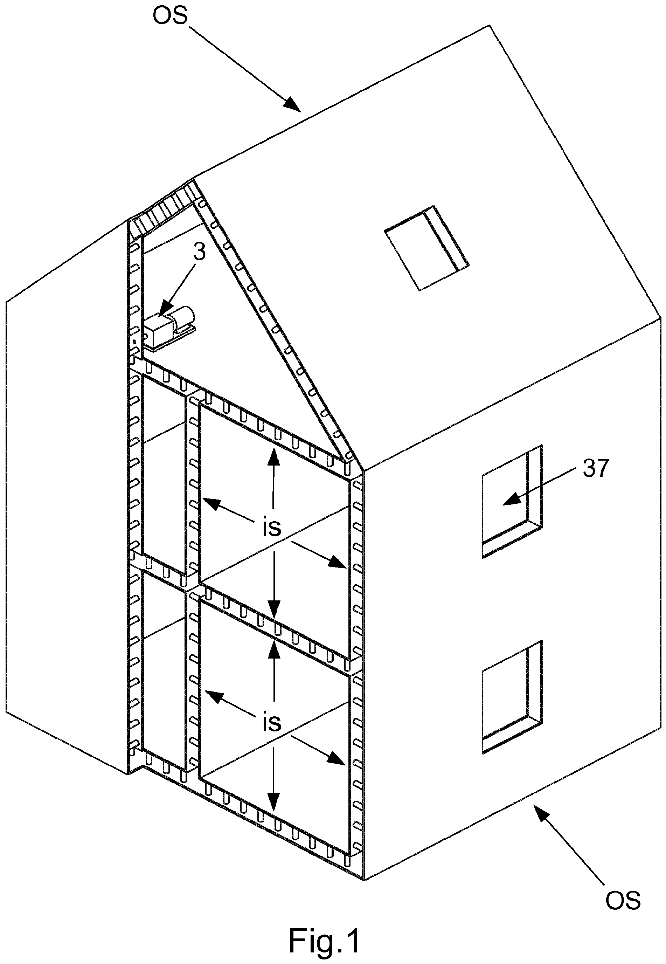

Figure 1 : Représentation simplifiée d'un bâtiment montrant un volume global ou peau externe (OS, outer skin) englobant des sous-volumes ou peaux interne (IS, inner skin). La coque est constituée par le volume complémentaire dudit ou desdits sous-volumes (IS) par rapport au dit volume global (OS). La pompe à vide (3) fait le vide d'air de la coque. Les ouvertures (37) pratiquées dans la coque sont destinées aux ouvrants. Cette vue illustre la première revendication.

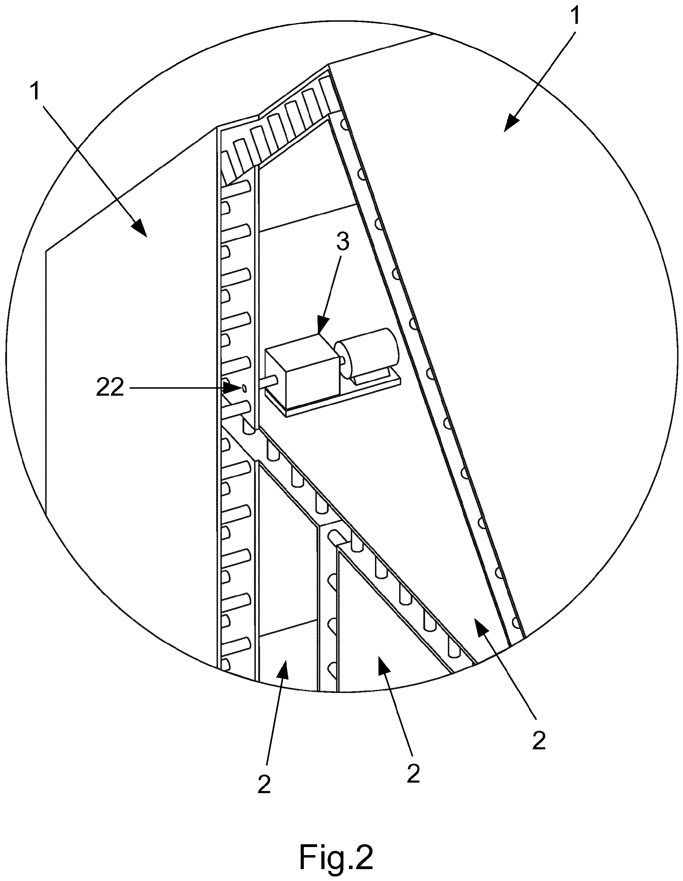

Figure 2 : Vue agrandie du bâtiment de la figure 1 avec un zoom sur la pompe à vide (3) reliée au volume intérieur de la coque par un seul orifice (22) de prise d'air, ou prise de vide. La peau externe globale est constituée par les plaques rigides (1). Les peaux internes des pièces d'habitation sont constituées par les plaques rigides (2).

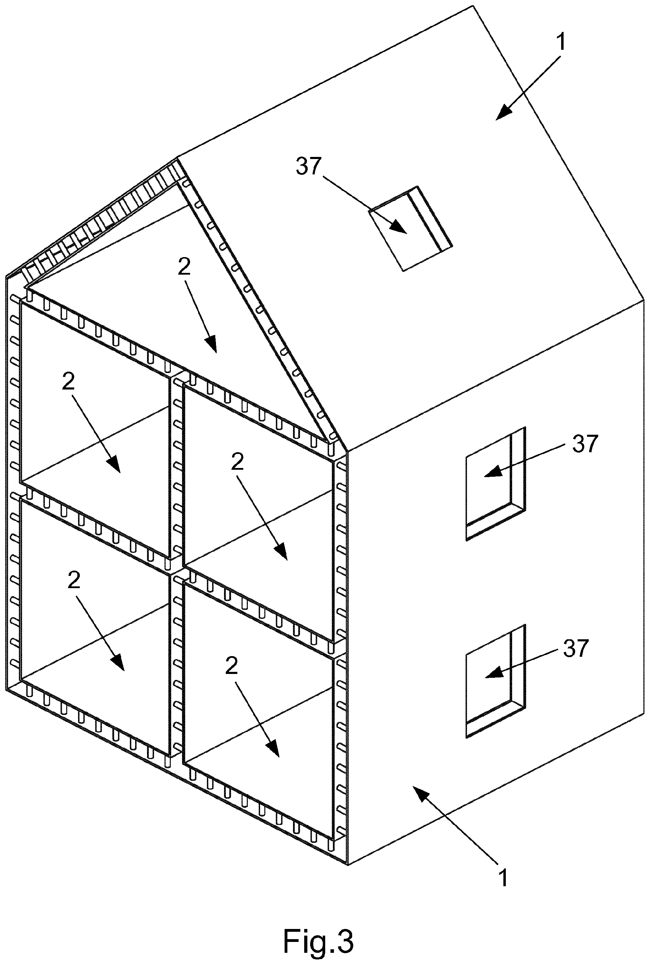

Figure 3 : Vue du bâtiment de la figure 1, ouvert sans son mur de pignon. La peau externe globale est constituée par les plaques rigides (1). Les cinq peaux internes des pièces d'habitation sont constituées par leurs parois, donc par les plaques rigides (2). Les trois ouvertures (37) pratiquées dans la coque sont destinées aux baies de fenêtre. Ce bâtiment étant simplement posé sur le sol sans fondation, c'est une superstructure.

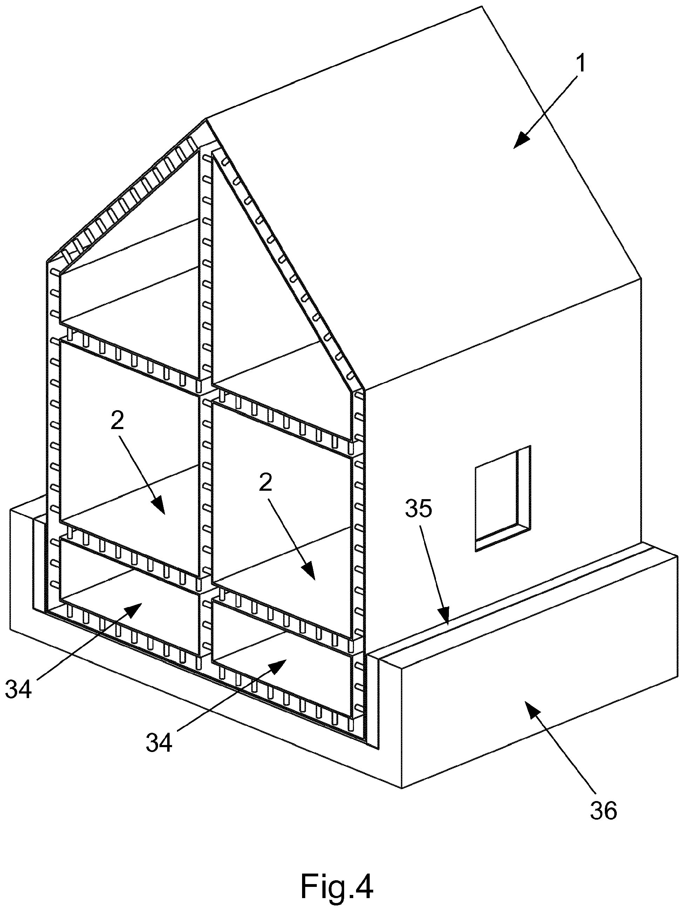

Figure 4 : Bâtiment flottant en cas d'inondation. La hauteur des deux vides sanitaires ou sous-sol (34) est proportionnelle à la masse totale du bâtiment. Le volume des vides sanitaires ou sous-sol étanches doit permettre à la force d'Archimède d'élever le bâtiment afin de le tenir hors eau. A remarquer que le mur de refend central permet de reporter jusqu'au faîtage du toit la poussée de l'eau sous l'assise. La terre (36) est retenue par le muret (35) afin que le bâtiment retrouve sa place d'origine après la décrue. Le bâtiment devra être amarré au sol en cas de risque de forte inondation faisant sortir le bâtiment de sa fosse.

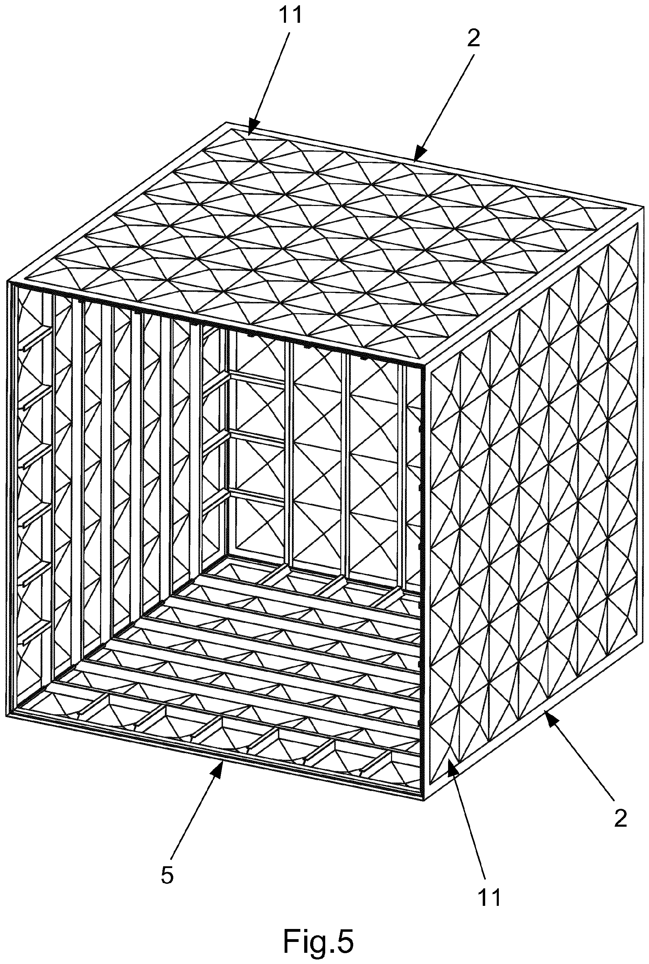

Figure 5 : Vue de cinq parois ou plaques assemblées (2) constituant une pièce d'habitation ou sous-volume (IS). A remarquer que les plaques sont jointives par l'intermédiaire des bordures (5). Leurs assemblages seront détaillés dans les cinq vues suivantes. Les plaques sont entièrement embouties, l'emboutissage est en forme de quadrillage dont chaque carré est constitué d'une pyramide (11).

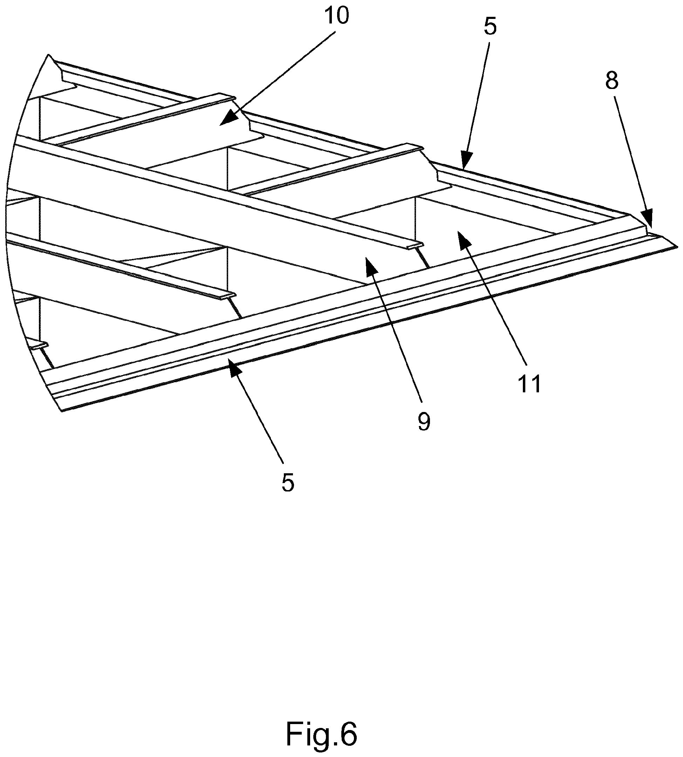

Figure 6 : Vue détaillée d'un coin d'une plaque (2), constituant d'une pièce d'habitation. L'angle entre la bordure (5) et la plaque (2) forme un V fermé. Les bordures pliées en V fermé sont destinées à relier les plaques dont les faces extérieures de la coque forment un angle saillant entre elles. C'est le cas des parois des pièces d'habitation. La bordure comporte sur sa ligne médiane un renflement (8) à faces droites qui peuvent aussi être arrondies. Les nervures en T (9) font office de chaînages des pièces et de raidisseurs des pyramides renversées (11). Les segments de nervure en T [10] font office de liaisons des plaques entre elles. On remarquera que les nervures en T s'encastrent dans le V fermé et servent à consolider les bordures (5).

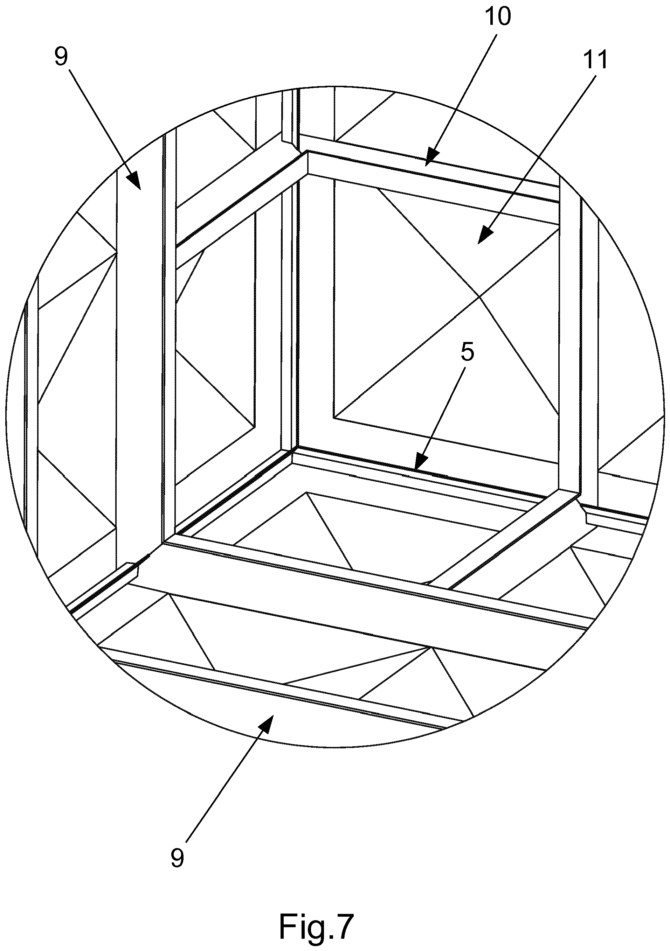

Figure 7 : Zoom à l'intérieur des cinq plaques assemblées de la figure 5. La vue est centrée sur un angle au fond du volume formé par les plaques. Les segments de nervure en T [10] font office de liaisons de la plaque du fond avec ses quatre plaques adjacentes. Les nervures en T (9) sont jointives dans les angles du volume. A remarquer que les sommets des pyramides sont orientés vers l'intérieur de la coque. Les plaques sont donc incurvées vers l'intérieur de la coque sous vide de tout gaz. Vues de l'extérieur, elles sont donc concaves.

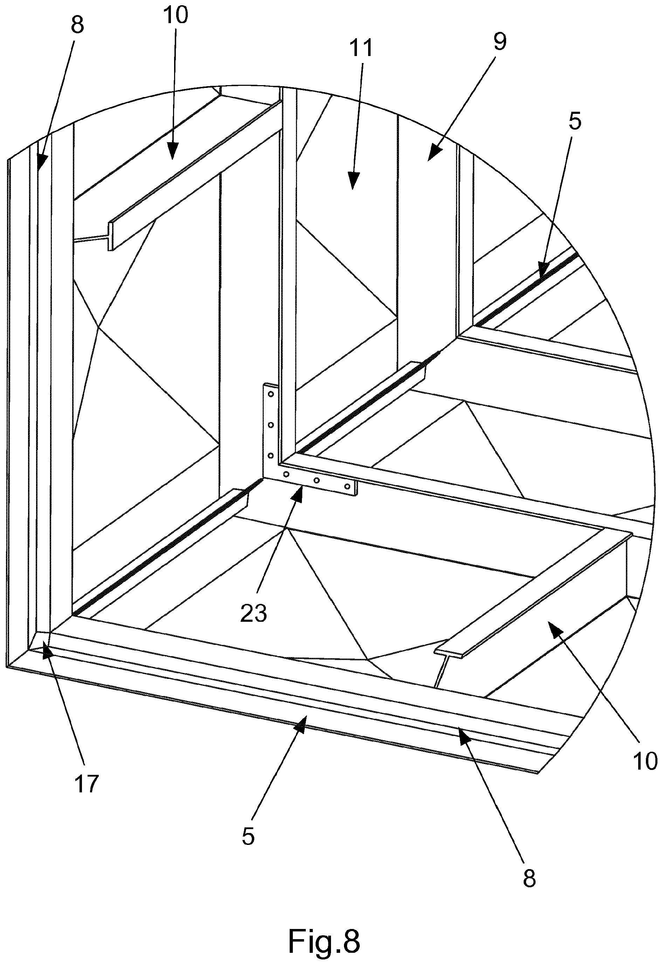

Figure 8 : Zoom sur l'intérieur des cinq plaques assemblées de la figure 5. La vue est centrée sur un angle à l'avant du volume formé par les plaques. Les bordures en V fermé (5) des plaques adjacentes sont jointives et seront assemblées mécaniquement. Les nervures en T (9) formant un chaînage ceinturant la pièce d'habitation sont assemblées à leurs extrémités à la fois par les bordures en V fermé (5) et par les platines (23). Les deux segments successifs d'un chaînage, donc les profilés en T successifs, sont assemblés avec les platines (23) par des boulons introduits dans leurs perçages. Les platines (23) épouseront l'angle formé entre deux plaques, elles seront droites quand les plaques seront alignées dans le même plan. La plaque frontale étant absente, la jonction des deux bordures en V fermé met en évidence l'espace formé par les deux renflements (8) symétriques qui se font face, des deux bordures (5) et dans lequel du mastic (17) sera placé.

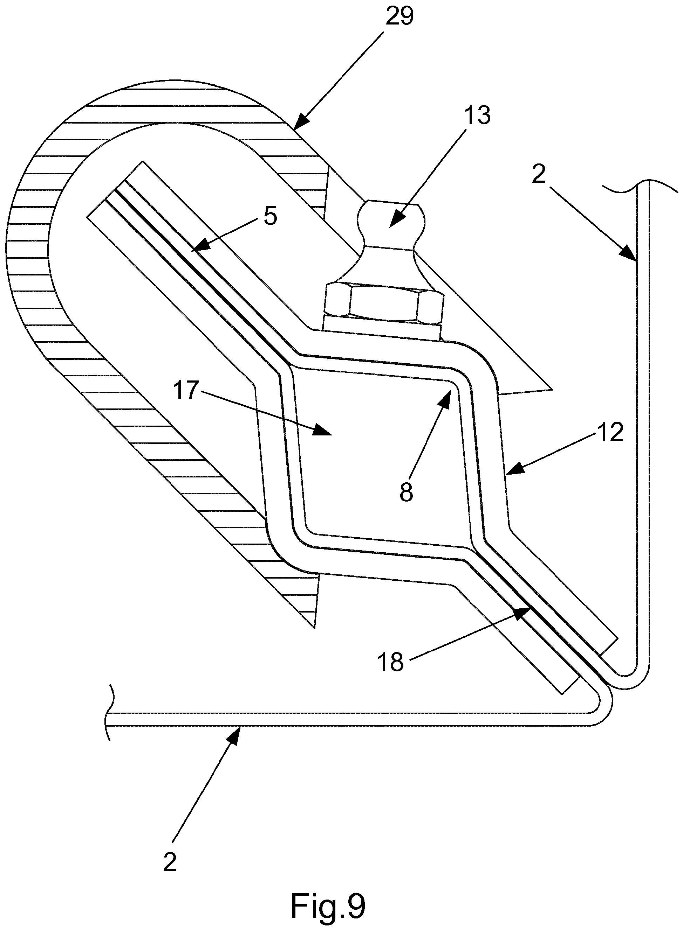

Figure 9 : Coupe d'un assemblage de deux bordures en V fermé (5) de deux plaques (2) constituant les parois d'un sous-volume (IS). Les deux renflements (8) des bordures, symétriques et en miroir l'un par rapport à l'autre, ont deux faces planes. Ces faces peuvent être planes ou arrondies. Entre les deux plans de joint des bordures en contact est insérée une pellicule de plomb (18) servant de joint d'étanchéité. Sur les deux bordures (5), sont soudées par points deux mâchoires (12) épousant la forme renflée des bordures. Les deux mâchoires (12) sont pressées par une pince en U (29) fabriquée en acier à ressort. Dans le volume formé par les deux renflements (8) en regard l'un de l'autre est inséré du mastic (17). Avant leur rapprochement, les deux renflements (8) sont remplis de mastic indépendamment l'un de l'autre, pour ensuite fusionner au montage. Un graisseur (13) est soudé par une soudure étanche sur le renflement (8) du joint périphérique. Après assemblage des bordures, il sera ainsi possible d'injecter du mastic sous pression. Si du mastic s'échappe par le plan de joint garni de plomb à l'extérieur des bordures (5), c'est une indication de fuite qu'il faudra supprimer sous peine de risque d'introduction d'air dans la coque.

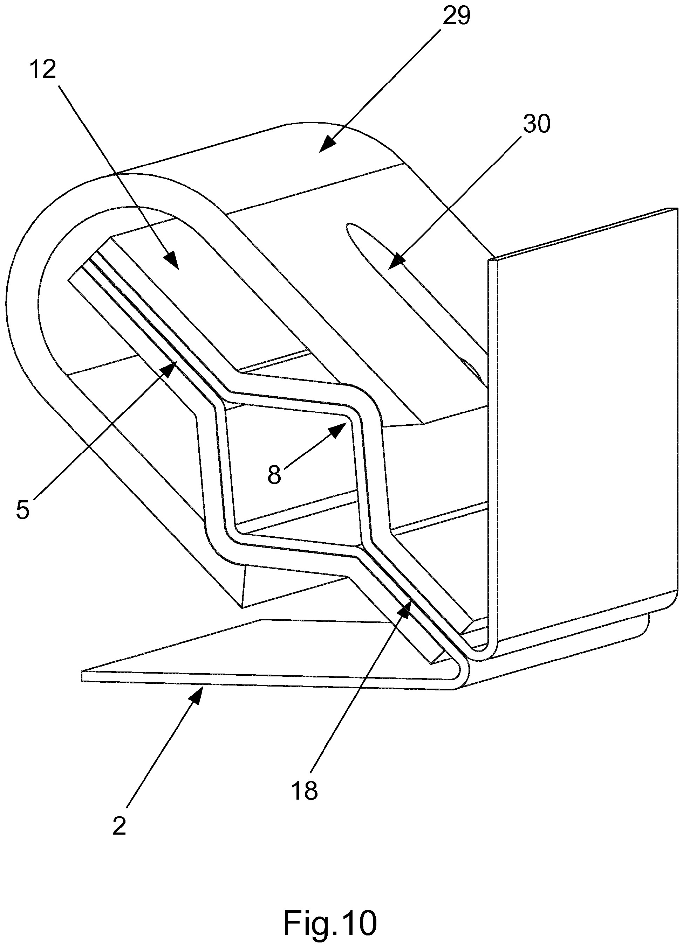

Figure 10 : Vue en perspective de l'assemblage de deux bordures (5) avec la pince en U (29). Un regard (30) est usiné dans la pince (29) afin de donner un accès au graisseur (13). Les explications de l'obtention de l'étanchéité sont identiques à celles de la figure 9. Tous les joints périphériques de chaque peau externe et de chaque peau interne communiquant entre eux, un seul graisseur (13) peut être prévu par peau. Une couche en élastomère peut être employée en remplacement de la pellicule de plomb (18), mais sa durée de vie sera moindre. Un mélange de métaux ductiles peut aussi être employé.

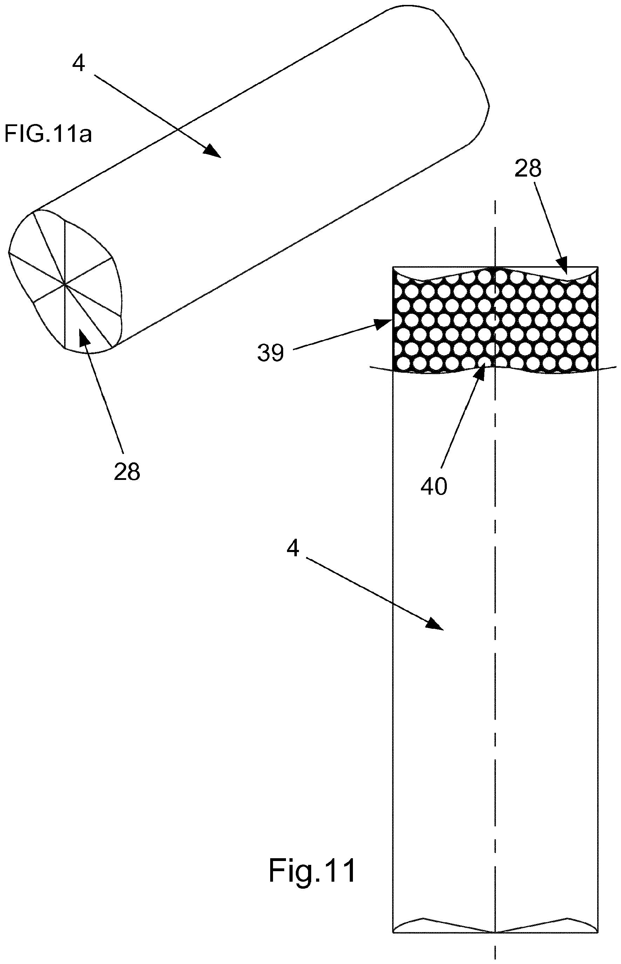

Figure 11 : Vue avec coupe partielle d'une colonne cylindrique (4) ou entretoise permettant d'écarter les plaques (2) des sous-volumes (IS) des plaques (1) du volume global (OS). Les deux extrémités (28) des colonnes sont taillées ou moulées suivant des facettes afin d'épouser la forme de quatre coins adjacents des bases des pyramides concaves. Les extrémités (28) comportent huit facettes réunies au même niveau au centre des colonnes et s'évasent vers la circonférence des colonnes suivant des angles alternativement inversés. Chaque facette correspond à une face d'une des quatre pyramides. Les colonnes sont fabriquées en verre cellulaire [40] ceinturée d'une couche de polyester (39) armé de fils en fibre de verre. Du polyester chargé de fibres de verre peut être également surmoulé par injection sur les colonnes de verre cellulaire.

Figure 11a : Vue en perspective d'une colonne (4) en verre cellulaire. Outre le verre cellulaire, il est possible d'utiliser de la fibre de bois ou plus généralement de la fibre végétale compressée contenant de la lignine. La lignine permet de faire adhérer les fibres entre elles sous forte pression. Le matériel de production peut être une presse à briqueter en continu. La surface extérieure des colonnes (4) en fibres de bois sera imbibée de résine polyester.

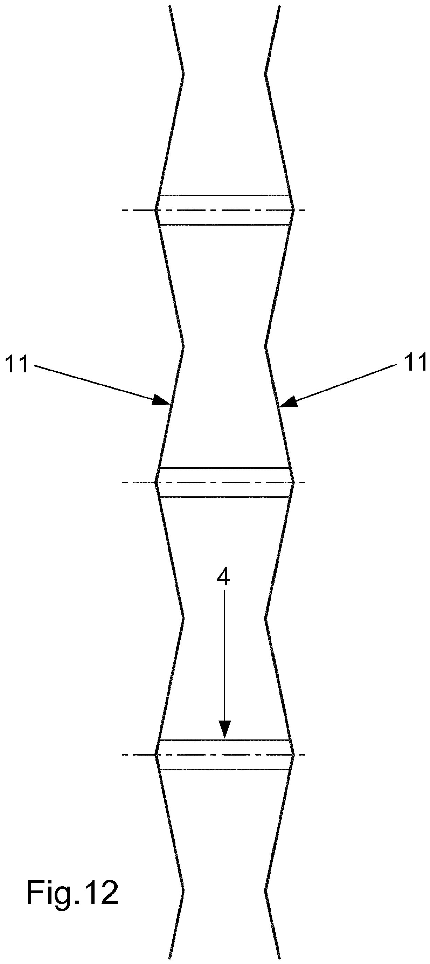

Figure 12 : Vue en coupe du montage d'une plaque extérieure (1) et d'une plaque intérieure (2) enserrant des colonnes. La coupe au centre des pyramides (11) montre que les plaques sont formées en zigzag et que les colonnes (4) sont encastrées dans les creux des zigzag. La dépression qui s'applique sur les faces des pyramides concaves et en miroir l'une par rapport à l'autre, exerce une force de compression sur les colonnes. Les colonnes n'occupent que 2,2 % du volume mis sous vide d'air. Le verre cellulaire ayant une densité dix fois inférieure au verre plein, la coque est vide de matière solide à 99,5 %.

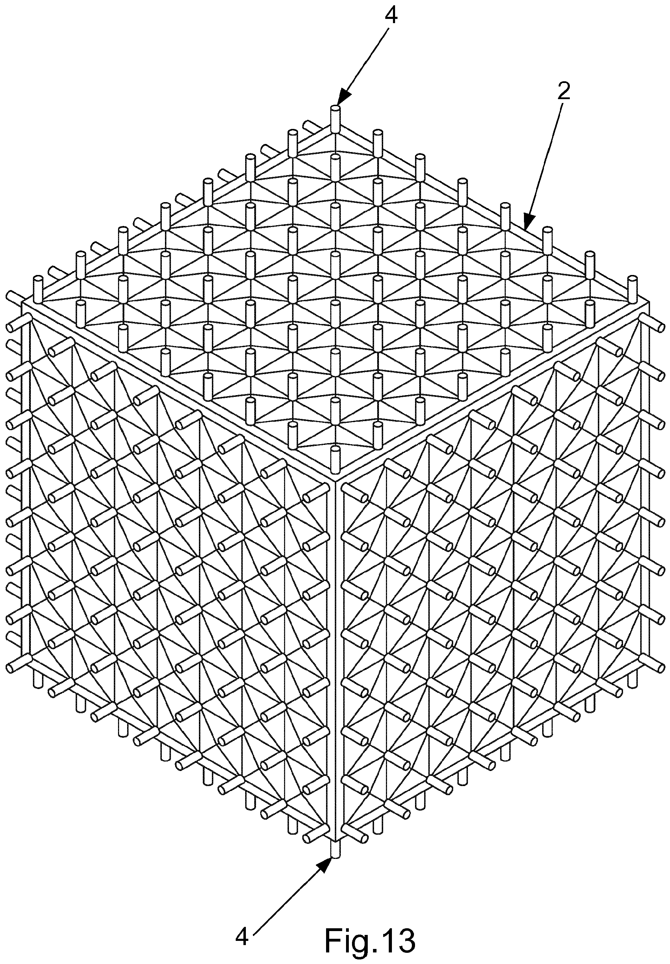

Figure 13: Vue extérieure d'un sous-volume (IS) ou pièce d'habitation avec ses cinq plaques (2) assemblées. Dans les creux de chaque pyramide sont positionnées les colonnes (4) ou entretoises. La répartition est avantageusement d'une colonne tous les 0,25 m². Cette vue est fictive puisque rien de peut maintenir les colonnes en place.

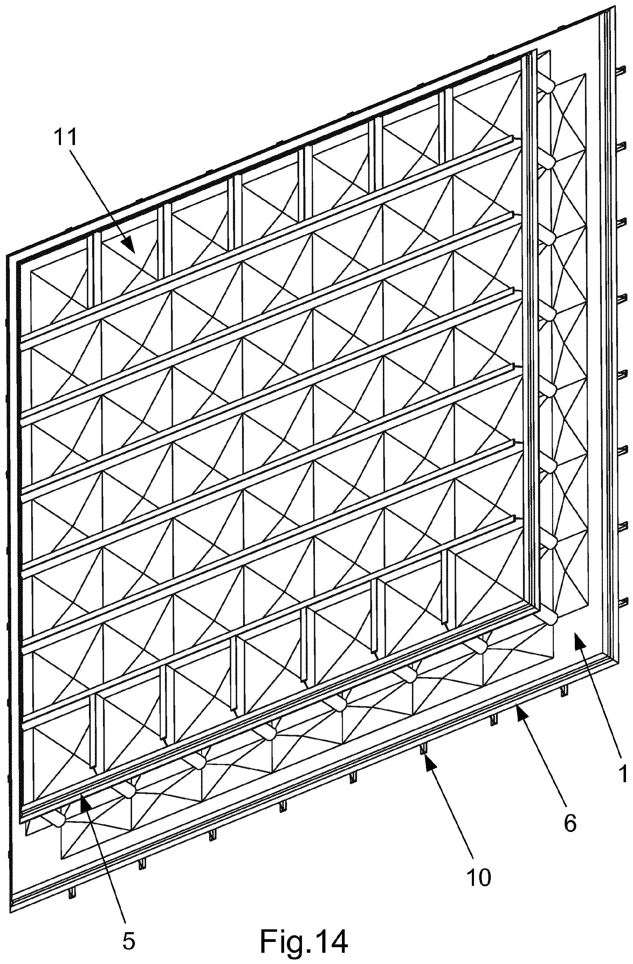

Figure 14 : Vue en perspective du montage d'une plaque extérieure (1) et d'une plaque intérieure (2) enserrant des colonnes (4). Seul l'assemblage des deux plaques permet de maintenir en place les colonnes (4). Ces deux plaques assemblées constituent un élément de paroi ou de plancher ou de toit pré-assemblé en usine. Les deux plaques seront reliées par des câbles décrits plus loin. Cette vue montre que les pyramides (11) sont concaves et en miroir, sauf les petites pyramides situées en périphérie des plaques et dont l'utilité est de raidir les plaques. On remarquera que les nervures sont externes à la coque.

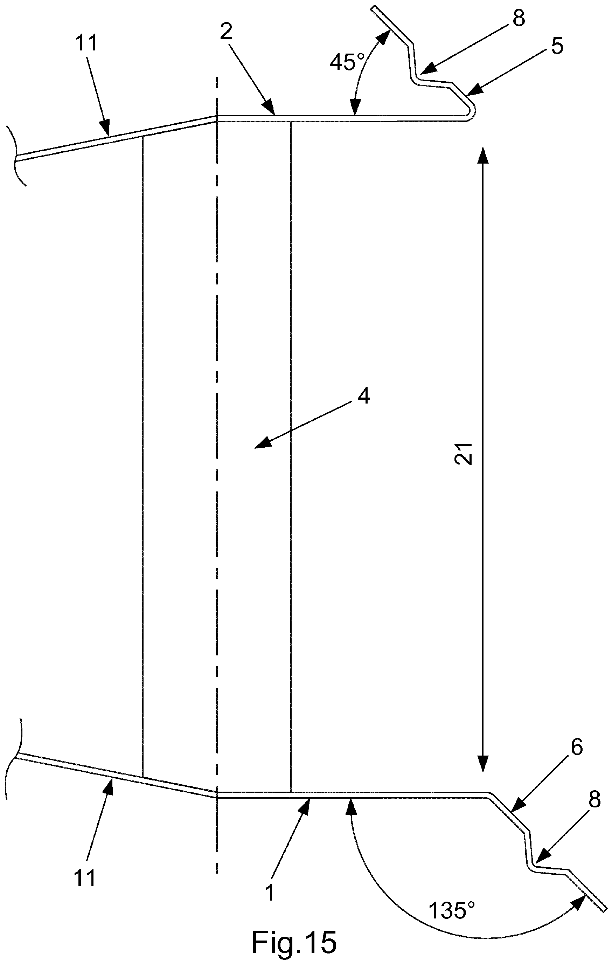

Figure 15 : Coupe brisée des bordures (5) et (6) des deux plaques (1) et (2) assemblées avec une colonne (4). Le type d'assemblage représenté est destiné à assembler les plaques situées dans le même plan. Les bordures (5) et (6) sont à l'extérieur de la coque sous vide. Cette vue montre que les plans de joint des deux bordures sont orientés du même côté, ici le côté intérieur du bâtiment. La ligne (21) montre que les deux bordures doivent être décalées de part et d'autre de cette ligne afin de pouvoir assembler sans difficulté les paires de plaques (1) et (2) qui sont pré-assemblées. Si les deux bordures d'une paire de plaques pré-assemblées n'étaient pas décalées, orientées du même côté et que les moyens de serrage n'étaient pas accessibles par l'extérieur, il faudrait assembler les plaques (1) et (2) à l'unité et non par paires. Les caractéristiques d'assemblage décrites dans cette figure sont valables quel que soit l'angle entre les plaques adjacentes, de 90 à 180°.

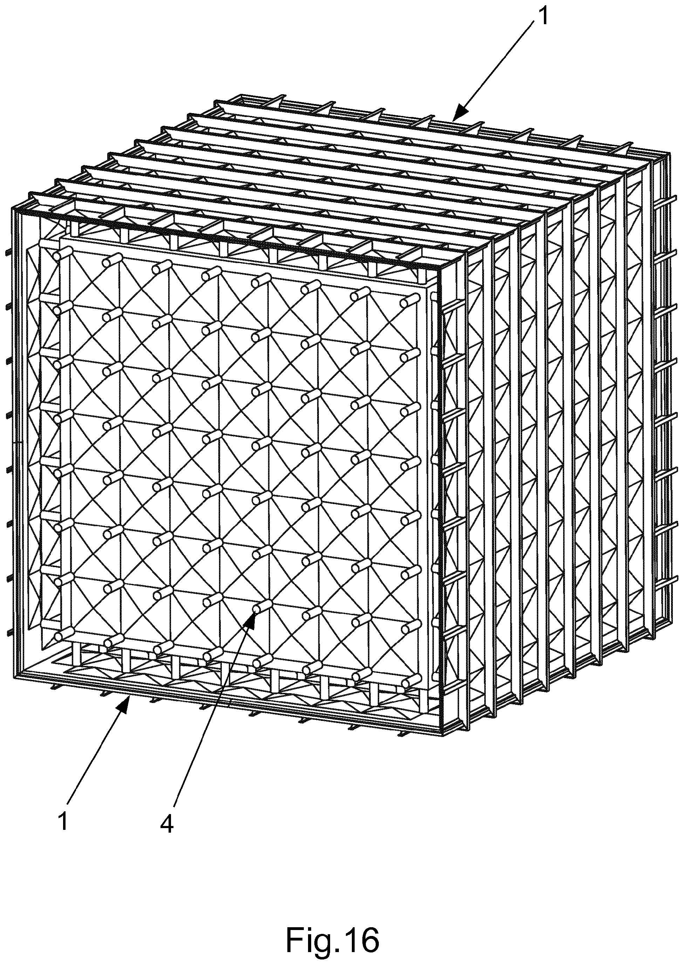

Figure 16 : Vue en perspective d'une unité d'habitation en forme de cube dont la plaque frontale n'est pas encore mise à sa place. Cette vue montre que le cube intérieur, constitué des plaques (2), est positionné et soutenu par l'ensemble des colonnes (4).

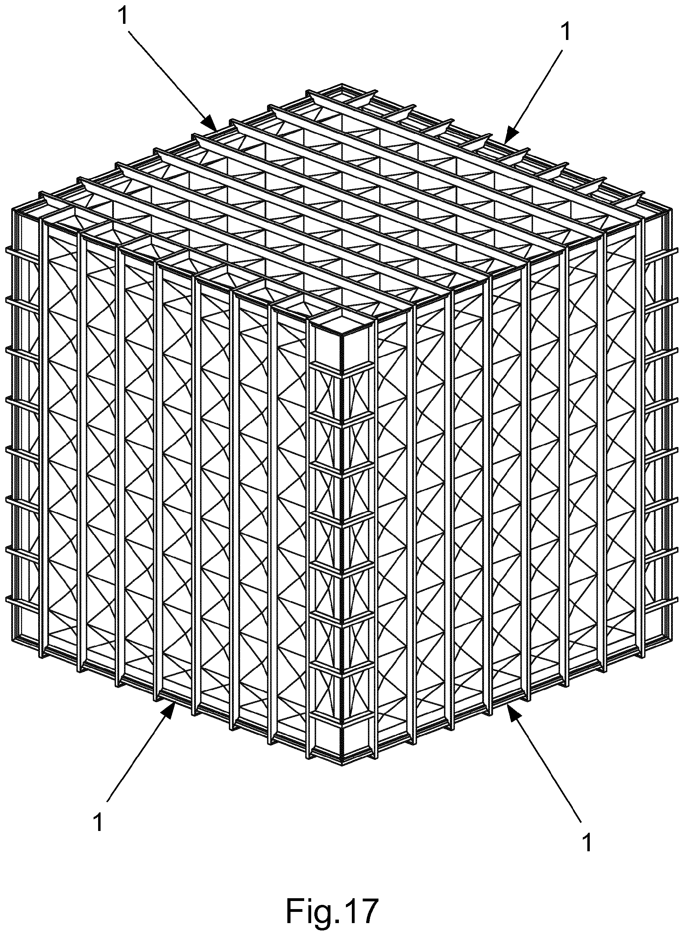

Figure 17 : Vue en perspective d'une unité d'habitation en forme de cube. Toutes les nervures (9) sont liées à leurs extrémités. Quatre plaques extérieures (1) sont ceinturées par les nervures (9) qui font office de chaînages. Les deux autres plaques extérieures (1) sont assemblées à l'aide des bordures (6) en V ouvert (décrites plus loin), ainsi que par les extrémités des nervures (9). Des segments de nervure [10] orthogonaux aux chaînages (9) sont ajoutés sur deux des rives des quatre plaques ceinturées par les chaînages. Leur seule utilité étant l'assemblage des deux plaques non ceinturées par les chaînages (9) et étant l'amélioration de la rigidité de l'ensemble.

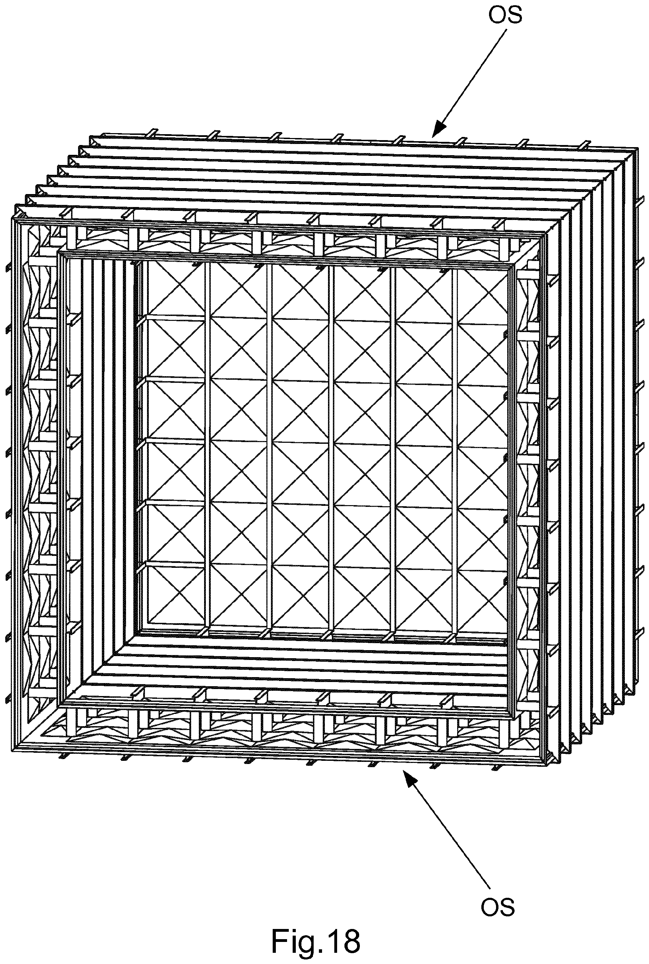

Figure 18 : Vue d'une unité d'habitation dont une des faces est ouverte. Cette vue met en évidence que le cube intérieur, constitué des plaques (2) de la pièce d'habitation, est soutenu et ceinturé par les colonnes (4). Ces mêmes colonnes font office d'entretoises entre les plaques intérieures (2) et les plaques extérieures (1). Sous la pression atmosphérique qui est de 10 tonnes/m², l'unité d'habitation ou cube composé de deux peaux étanches va se rigidifier.

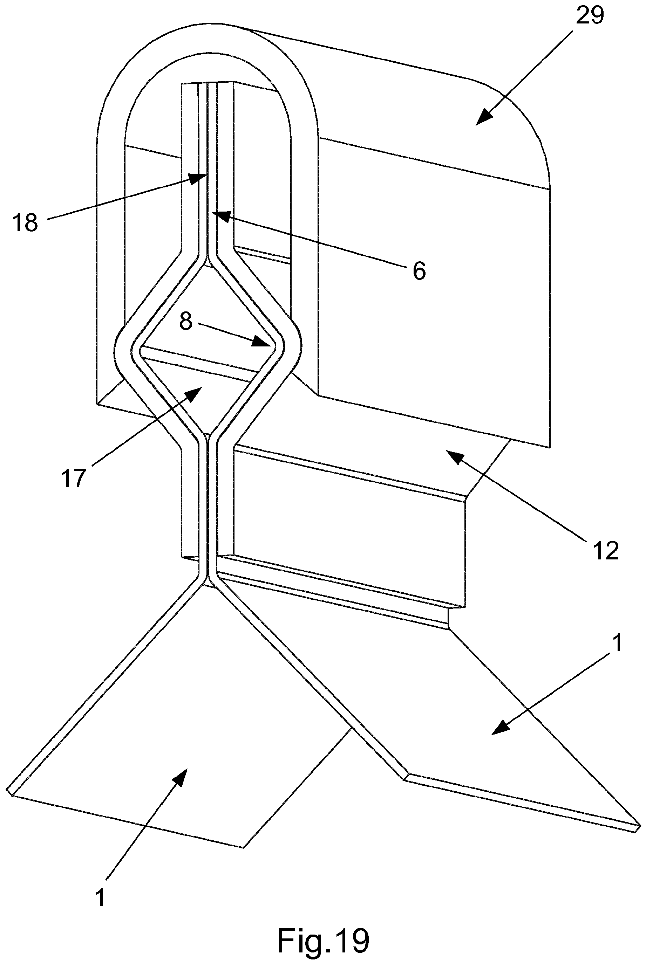

Figure 19 : Coupe d'un assemblage de deux bordures en V ouvert (6) de deux plaques (1) constituant les parois du volume global (OS). La description du principe de l'étanchéité est strictement identique à celle de la figure 9, il suffit de s'y reporter. Ces bordures situées à l'extérieur du bâtiment, sont accessibles après démontage du parement, mais les pinces (29) à profil en U ne pouvant être posées et déposées qu'avec un appareillage spécial, cela rend difficile un vol par effraction. L'appareillage spécial consistera en un écarteur hydraulique à crochets. Les pinces en U exercent une pression sur les deux mâchoires (12), donc sur les bordures étanches (6) et sur la pellicule de plomb (18).

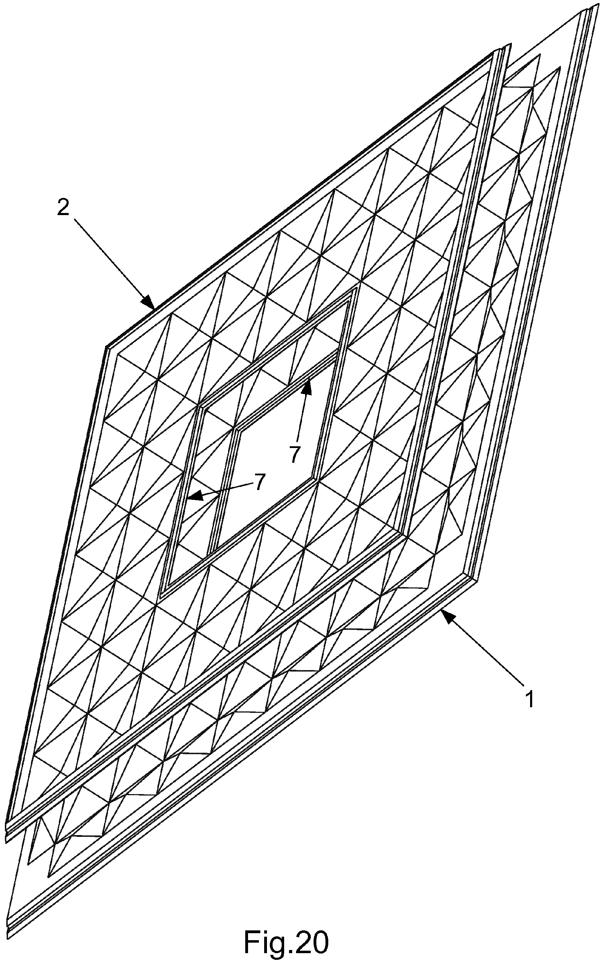

Figure 20 : Vue d'une plaque extérieure (1) et d'une plaque intérieure (2) sans les colonnes (4) et sans leurs nervures (9) et (10). Deux ouvertures, en regard l'une de l'autre, ceinturées par une bordure (7) sont pratiquées dans les plaques (1) et (2). Ces deux ouvertures sont destinées à recevoir des baies de fenêtre. Les deux bordures (7) comportent un renflement périphérique (8), identique au renflement des bordures (5) et (6).

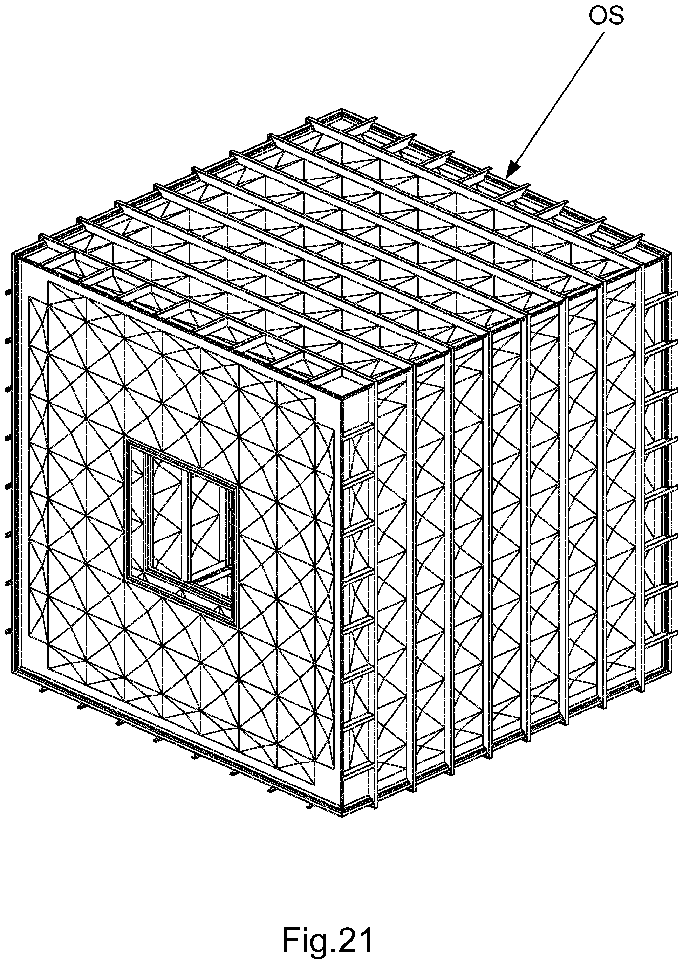

Figure 21 : Même vue en perspective d'une unité d'habitation que la figure 17 mais dont la paroi frontale comporte les deux ouvertures en regard l'une de l'autre de la figure 20.

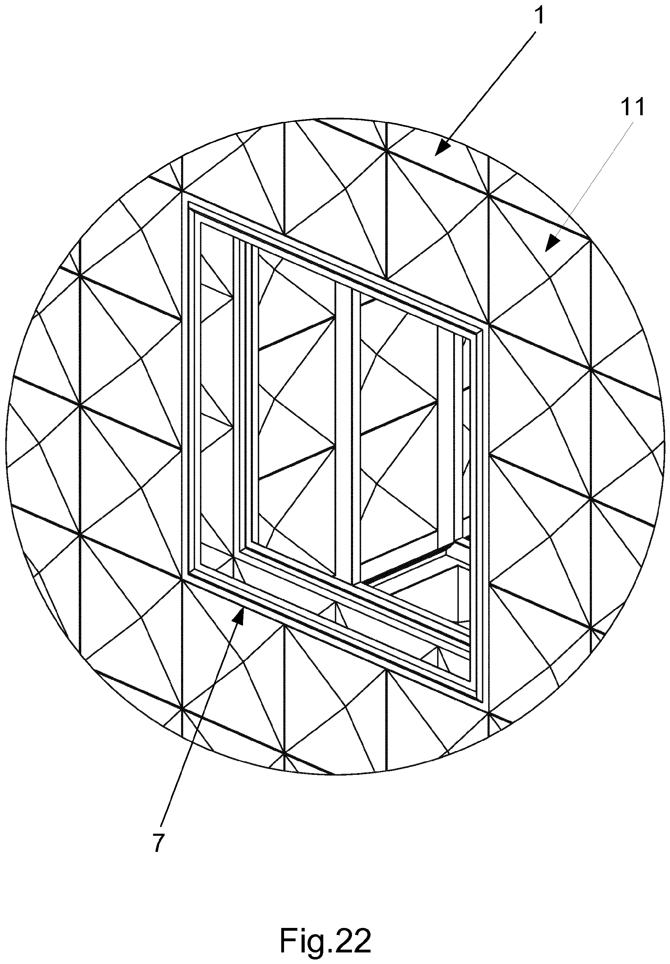

Figure 22 : Zoom sur les deux ouvertures pratiquées dans les plaques (1) et (2), en regard l'une de l'autre de la figure 21.

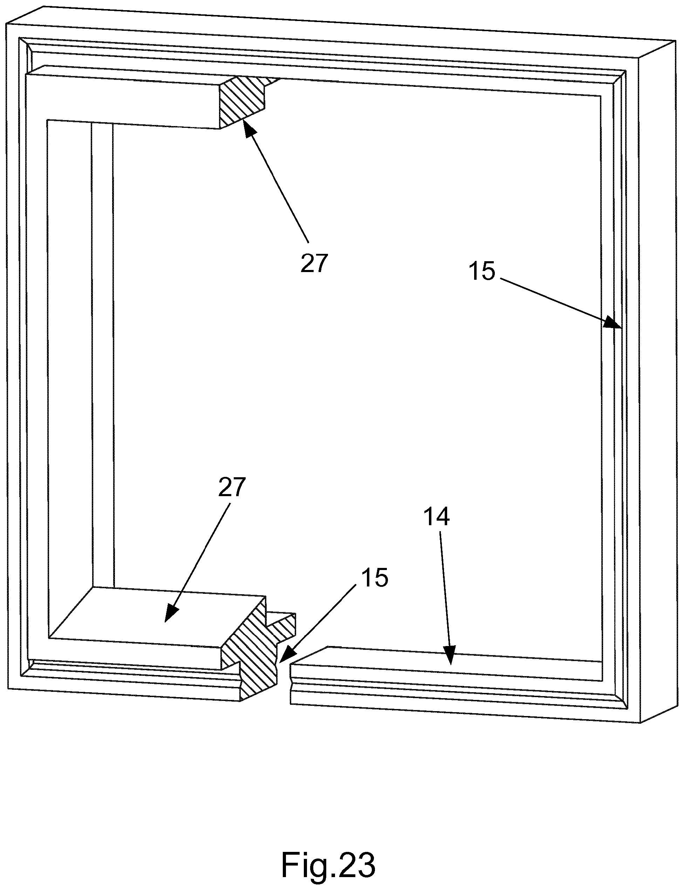

Figure 23 : Vue d'un cadre (14) étanche aux gaz destiné à être placé entre les deux ouvertures en regard l'une de l'autre pratiquées dans les deux plaques (1) et (2). Ce cadre comporte sur ses deux plans de joint, des rainures périphériques (15) dont la forme est identique aux renflements des bordures (5), (6) et (7). Ces rainures (15) doivent être en regard des renflements (8) des bordures (7). Dans le cadre (14), des perçages filetés seront prévus pour serrer les deux bordures (7) sur ledit cadre. Un bloc-baie (27), support de dormant d'une fenêtre ou d'une porte, peut être intégré au cadre (14) et ne former qu'une seule pièce.

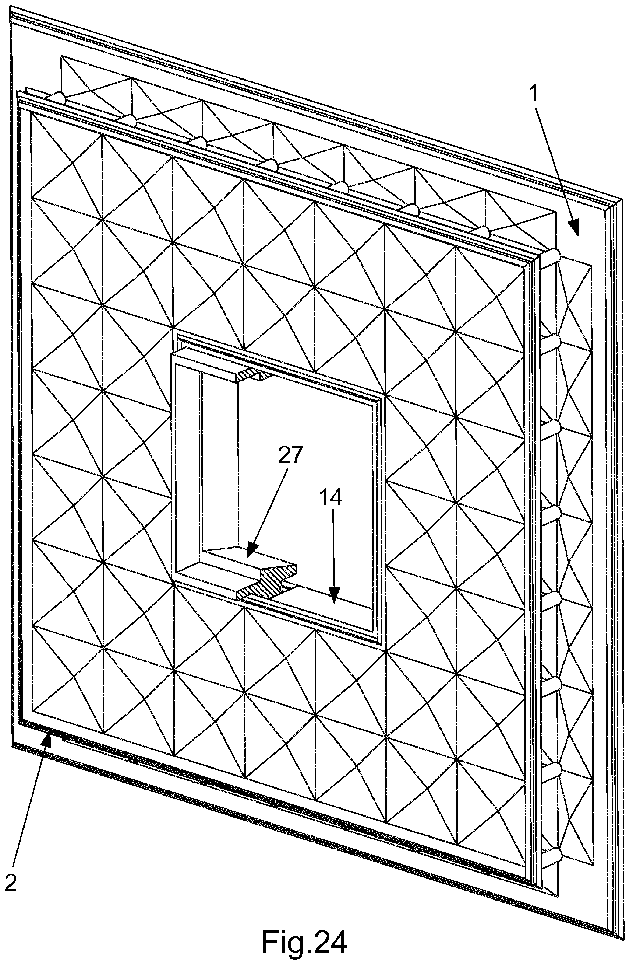

Figure 24 : Même vue que la figure 20 mais avec le cadre (14) installé à son emplacement entre les deux bordures (7). Les colonnes (4) sont également montées à leurs emplacements car le cadre (14) d'une embrasure et les colonnes (4) doivent être placées en même temps.

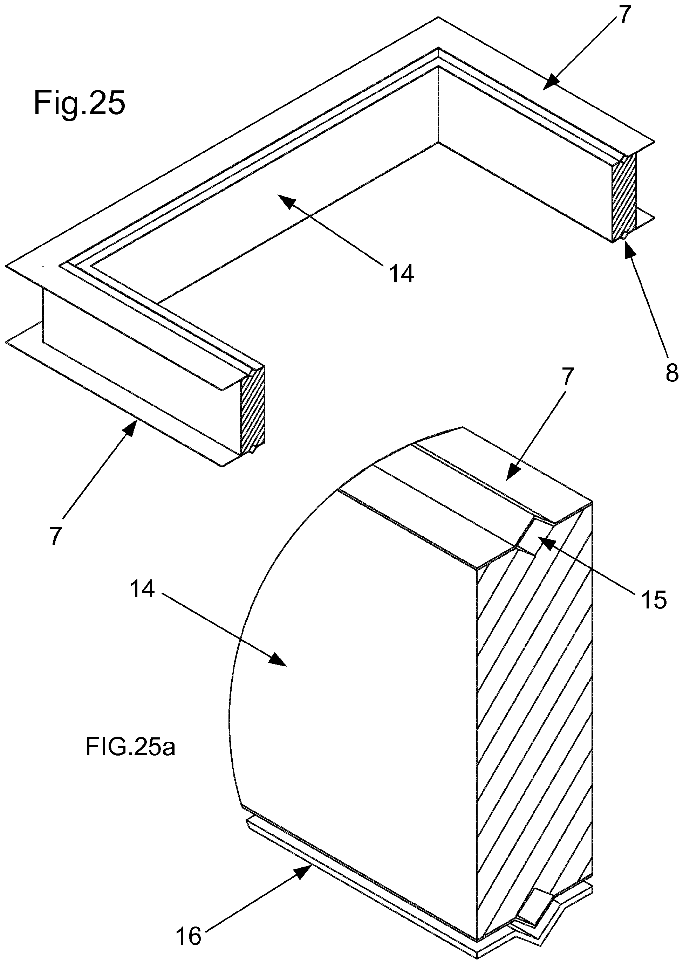

Figure 25 : Coupe d'un demi cadre (14), les deux bordures (7) sont montées à leurs emplacements. Les deux rainures périphériques (15) du cadre sont en regard avec les deux renflements (8) des deux bordures (7). Une pellicule de métal ductile ou du plomb (18) sera insérée entre les bordures (7) et les plans de joint du cadre (14).

Figure 25a : Coupe du cadre (14), des bordures (7) et d'une mâchoire (16). Les deux mâchoires périphériques (16) seront vissées sur les deux plans de joint du cadre (14) et exerceront une pression sur les bordures (7) et les pellicules de plomb (18). Avant leur rapprochement, les rainures (15) et les renflements (8) seront remplis de mastic (17) indépendamment les uns des autres et fusionneront au montage. La description du principe de l'étanchéité est identique à celle de la figure 9, il suffit de s'y reporter. Un graisseur (13) équipera le renflement périphérique (8) de chaque bordure (7).

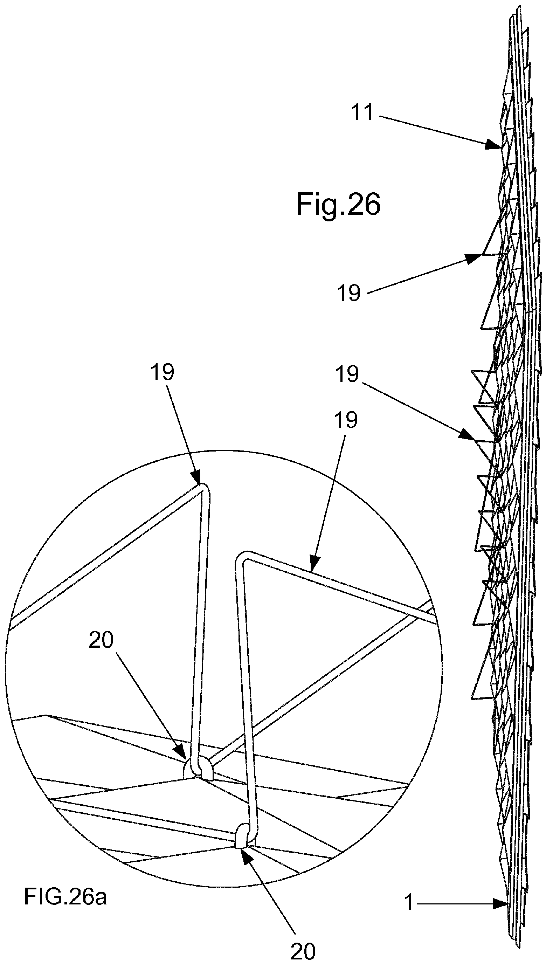

Figure 26 : Vue rasante d'une plaque (1) sur laquelle sont enfilés deux câbles (19). Ces câbles sont à l'intérieur du volume sous vide de tout gaz. Ces câbles (19) en zigzag, passant alternativement d'une plaque (1) à l'autre (2), sont destinés à maintenir une pression sur les colonnes (4). Les câbles maintiennent ainsi le contreventement, même en l'absence de vide. Ils sont également destinés à l'assemblage en usine d'une paire de plaques (1) et (2) avec les colonnes (4) intégrées à l'assemblage. Ces ensembles (1), (2) et (4) constituent des unités de parois complètes qu'il suffit d'intégrer au montage du bâtiment par assemblage des bordures (5) et (6) et des chaînages (9) et (10).

Figure 26a : Zoom sur quatre boucles de deux câbles (19). Les boucles sont ancrées à une plaque (1) par l'intermédiaire de deux anneaux [20] soudés par points sur des sommets de pyramides concaves (11). Les câbles (19) sont enfilés dans les anneaux (20). Les anneaux d'une plaque (1) sont en miroir avec ceux d'une autre plaque (2). Si un arrêt de câble est prévu dans chaque anneau d'ancrage (20), le contreventement de la paire de panneaux (1) et (2) sera amélioré.

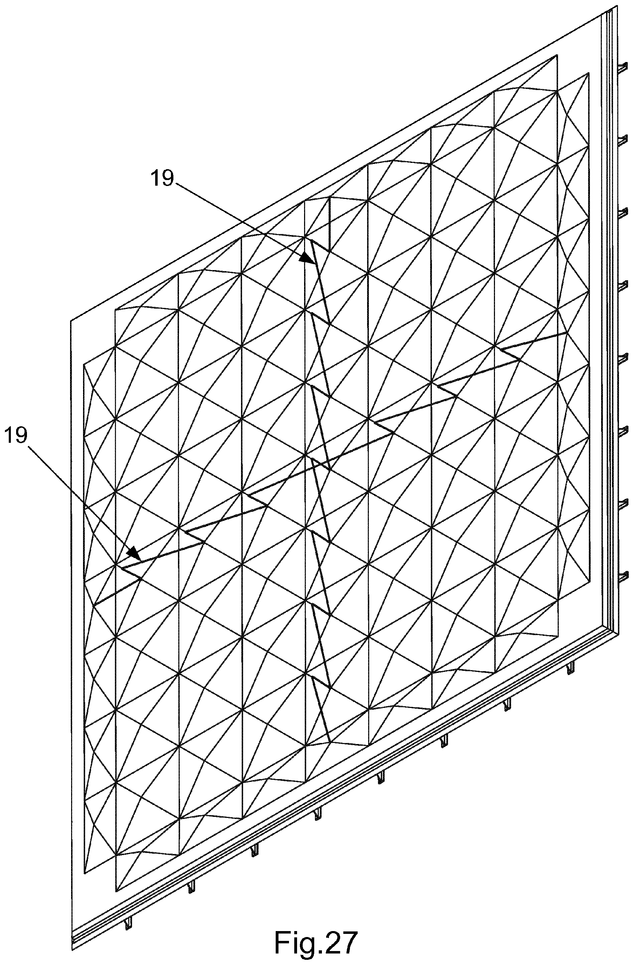

Figure 27 : Vue en perspective d'une plaque (1) sur laquelle sont enfilés deux câbles (19). L'on peut utiliser autant de câbles que nécessaire. Les câbles peuvent être en acier, en nylon, en polyamide, ou toute autre matière monobrin ou multibrins isolante et résistante.

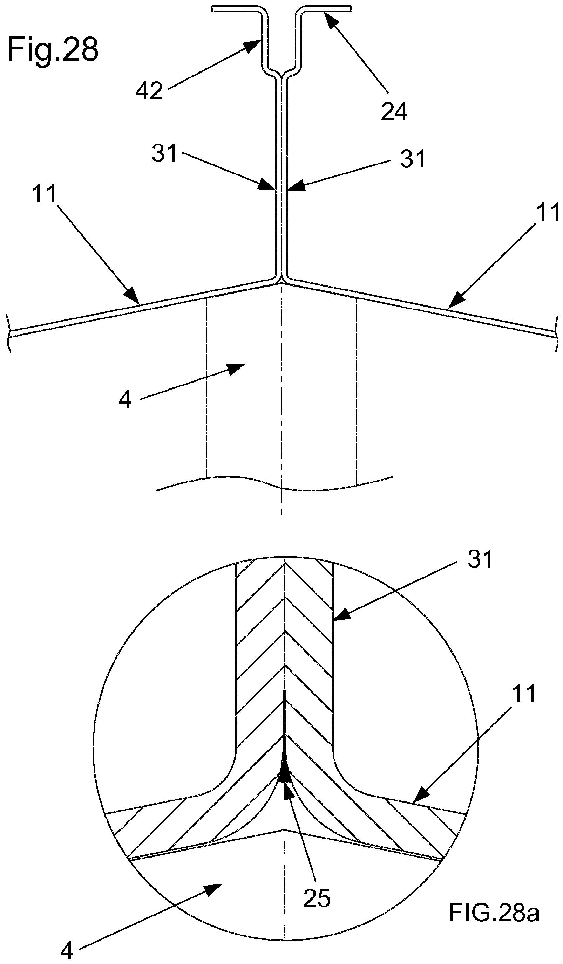

Figure 28 : Vue en coupe d'une nervure (9) à profil en T composée des deux prolongements ou excroissances ou flancs (31) des deux pyramides adjacentes (11). Le profilé en T est donc composé des deux flancs (31) soudés par points entre eux. Les rives des tôles sont pliées en L formant ainsi les ailes (24). À la jonction des bases de quatre pyramides correspondent des colonnes (4). Ainsi les nervures (9) reposent sur les colonnes (4). L'épaulement linéaire (42) (en option) permet d'améliorer la rigidité de la nervure (9) et de noyer la platine (23).

Figure 28a : Zoom sur la soudure des profilés pyramides-nervures composée d'une soudure étanche avec métal d'apport (25). Cette soudure (25) et les soudures par points des flancs (31) peuvent être remplacées par des brasures fortes qui vont complètement occuper la surface de jointure entre les deux flancs (31).

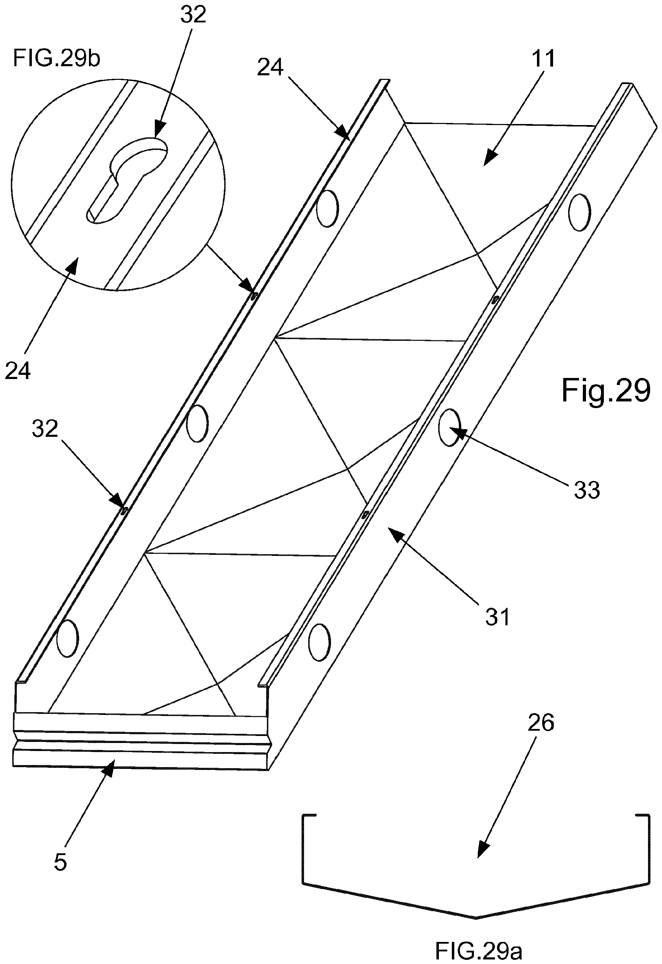

Figure 29 : Vue d'une extrémité d'une seule rangée de pyramides bordée par ses deux flancs (31) et composés d'une seule tôle emboutie. Ces profilés linéaires emboutis dans une seule feuille de tôle nécessitent un matériel de production moins conséquent que celui qui serait nécessaire pour emboutir la tôle d'une plaque entière. Les flancs (31) des profilés (26), ou demi-âmes des nervures (9) à profil en T sont ajourés par des lumières (33) percées à l'emporte pièce. Ces lumières permettent le passage des câbles, des tuyaux, de l'aération.

Figure 29a : Section d'une pyramide en son centre et de ses deux flancs et demi-âmes des nervures, le tout forme un profilé (26). Les pyramides concaves (11), les flancs (31), les ailes (24) et les bordures (5) et (6) sont embouties et pliées dans une seule tôle découpée, ajourée et percée avant ou pendant son emboutissage.

Figure 29b : Des perforations oblongues ou glissières (32), sont pratiquées sur les ailes (24) des profilés en T, permettant le montage des panneaux (38) par simple emboîtement de têtes de vis spéciales positionnées en usine au dos desdits panneaux.

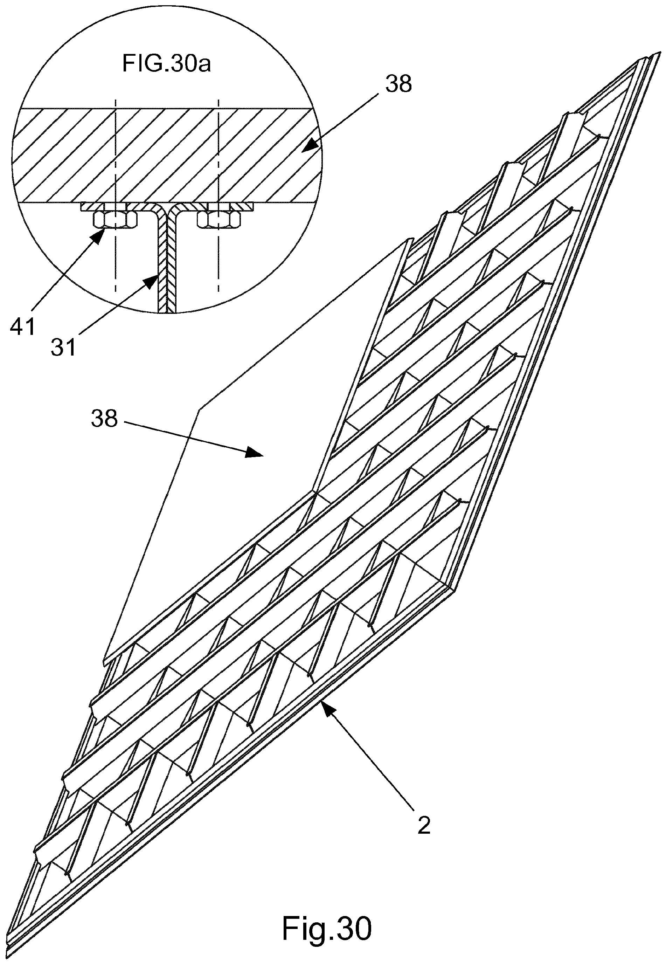

Figure 30 : Exemple d'une partie d'un panneau de doublage (38) fixé sur les nervures (9) et [10] d'une plaque intérieure (2).

Figure 30a : Fixation des panneaux (38) par les têtes de vis (41).

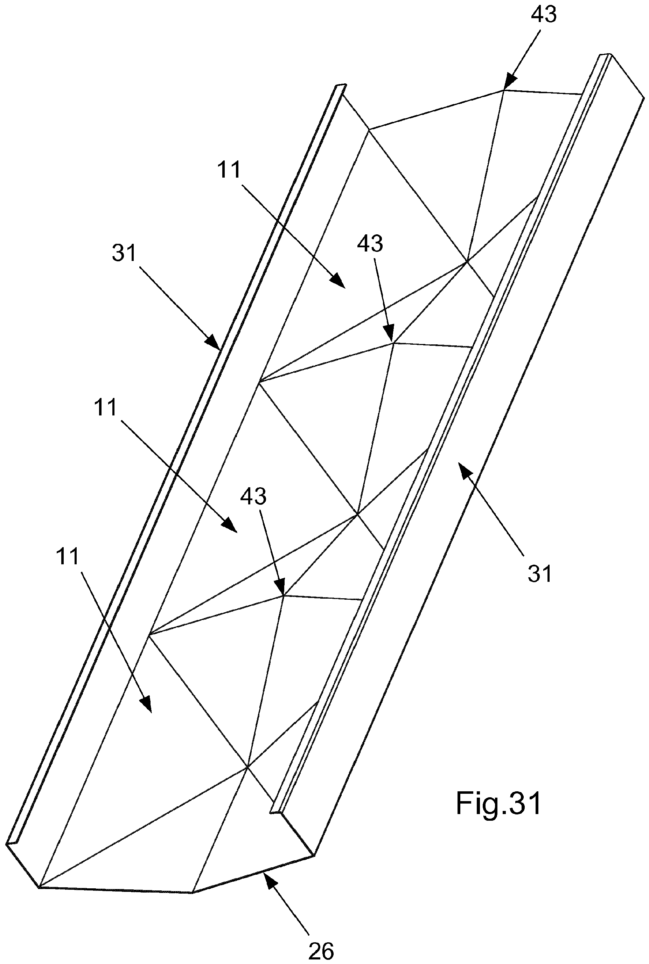

Figure 31 : Vue d'un profilé identique à celui de la figure 29 mais disposant d'une rigidité améliorée. Ce profilé sera obtenu par profilage d'une tôle suivant le profil (26) et par contre-pliage et emboutissage du profil, permettant d'obtenir une succession de pyramides emboîtées les unes dans les autres et alternativement inversées. Deux côtés des pyramides concaves (11) deviennent convexes et forment ainsi deux nouvelles pyramides (43). Les pyramides concaves (11) à quatre faces se transforment en nouvelles pyramides à six faces. Cette fabrication permet d'obtenir des plaques encore plus rigides et s'opposant encore plus aux déformations dues à la dépression. Deux coins des nouvelles pyramides convexes (43) s'appuient sur les colonnes (4).

Ce contre-pliage et emboutissage ne concerne pas les côtés des bases des pyramides (11) sur lesquels sont soudés les segments de nervure (10), les quatre côtés de ces pyramides (11) restant droits.

### Réalisation de l'invention

La structure de la coque continue isolante est constituée d'un volume global (OS) et de pièces d'habitation (IS) soutenues par des colonnes (4) en verre cellulaire (40), ceinturées par une couche de polyester (39) armé ou chargé de fibres de verre.

Le volume global de la structure est formé par une peau externe (OS, outer skin) composée d'une pluralité de plaques rigides jointives (1).

Les pièces d'habitation ou d'accueil sont des sous-volumes formés par des peaux internes (IS, inner skin) qui sont constituées par une pluralité de plaques rigides jointives (2) formant des cavités internes.

La coque est le volume complémentaire du ou des sous-volumes (IS) par rapport au volume global (OS). Ou bien, en langage booléen, le complémentaire du ou des sous-volumes par rapport au volume global.

Les sous-volumes (IS), qui sont des unités isolées, constituent les pièces d'habitation ou professionnelles. Les sous-volumes sont soutenus et positionnés par les colonnes de verre cellulaire (4).

Afin de rigidifier les plaques, et afin qu'elles ne s'incurvent pas vers l'intérieur de la coque sous l'effet de la dépression, celles-ci sont entièrement embouties suivant une structure quadrillée dont chaque carré est constitué d'une pyramide concave (11). Des dômes pourraient remplacer les pyramides, mais leur fabrication serait trop coûteuse.

Les plaques (1) et (2) ont ainsi une forme concave entre les colonnes (4), même si la concavité est constituée de faces planes.

Deux côtés sur quatre des bases de pyramides sont rendus convexes grâce à un pliage additionnel formant ainsi des pyramides (43).

A l'intérieur de la coque, la jonction des coins de quatre pyramides concaves (11) adjacentes forme un creux à huit faces dans lequel chaque extrémité de colonne (28) vient s'encastrer évitant ainsi une fixation mécanique. Deux pyramides (11) en miroir sont donc étayées par quatre quarts de colonne situés aux quatre coins de chaque pyramide (11). Deux coins des nouvelles pyramides convexes (43) formées par contre-pliage et emboutissage, sont étayés par deux quarts de colonne.

La dépression exercée par le vide sur les faces de chaque pyramide va étirer le métal. Cette traction va être contrecarrée par les quatre côtés de la base de chaque pyramide qui, avec les quatre côtés des bases des pyramides adjacentes, forment des profilés anguleux.

Ce sont donc les liaisons des côtés des bases des pyramides qui vont s'opposer à la force exercée sur le métal par la dépression.

De plus, les deux côtés rectilignes des pyramides (11) sont prolongés par des nervures (9) à profil en T, renforçant ainsi les deux profilés anguleux formés par les quatre côtés adjacents deux par deux des bases des pyramides. Les deux autres côtés sont donc convexes.

Les nervures (9) des plaques adjacentes font office de chaînages car leurs extrémités sont reliées par des platines (23) et par les bordures étanches (5) et (6) des plaques. Quatre nervures (9) reliées autour d'un volume global (OS) vont ceinturer ce volume et donc être équivalentes aux quatre segments rectilignes d'un chaînage. Quatre nervures (9) reliées à l'intérieur d'une pièce d'habitation vont ceinturer ce sous-volume (IS) et donc être équivalentes aux quatre segments rectilignes d'un chaînage.

Des embrasures (37) sont ménagées dans les plaques se faisant face. Une embrasure (37) peut être de forme cylindrique.

Les rives des plaques sont pliées vers l'extérieur de la coque, les bords sont ainsi relevés et forment avec les plans des plaques, soit un angle en V fermé (5), soit un angle en V ouvert (6).

Ces pliages (5) et (6) sont destinés à relier les plaques entre elles par le pincement des couples de bordures relevées qui sont en contact.

Les pliages en V fermé (5) sont destinés à relier les plaques (2) dont les faces extérieures à la coque forment un angle saillant entre elles. Les pliages en V ouvert (6) sont destinés à relier les plaques (1) dont les faces extérieures à la coque forment un angle rentrant entre elles. Même les plaques adjacentes qui sont situées dans le même plan seront reliées par des bordures en V ouvert ou en V fermé.

La configuration architecturale peut imposer que des plaques extérieures (1) soient reliées par des pliages en V fermé (5) et que des plaques intérieures (2) soient reliées par des pliages en V ouvert (6), notamment pour les plaques adjacentes situées dans le même plan.

Une plaque ne pouvant pas toujours couvrir toute la surface d'un mur, d'un plancher ou d'un pan de toit, il sera indispensable de raccorder plusieurs plaques alignées dans le même plan. Les bordures seront indifféremment en V fermé ou en V ouvert.

Toutes les liaisons des plaques sont impérativement situées à l'extérieur du volume sous vide de tout gaz et sont donc accessibles.

Naturellement, les extrémités des bordures (5) et (6) seront réunies par des soudures étanches dans les coins des plaques (1) et (2).

Les rives ou bordures en V fermé (5) ou en V ouvert (6) des plaques sont réunies par le pressage de mâchoires (12). Une pellicule d'étanchéité en plomb ou élastomère (18) sera placée entre les couples de bordures, rendant étanche l'assemblage des plaques (1) ou (2).

Les lignes médianes des deux bordures (5) ou (6) en contact seront dotées de renflements (8) symétriques rendant possible le stockage d'un joint en mastic (17) à texture plastique. Le mastic peut être fabriqué en utilisant la formule classique d'un mélange de carbonate de calcium et d'huile de lin. Il peut également être acrylique ou composé de toute formule chimique adaptée et même de goudron.

Un graisseur (13) fixé sur un seul renflement (8) d'un seul joint périphérique par volume, permet d'injecter du mastic (17) en prenant soin de ne pas écarter les bordures (5) ou (6) par une trop forte pression d'injection. Une sortie de ce mastic à l'extérieur du joint est le signe d'une fuite qui doit être obstruée.

La peau externe (OS) et les peaux internes (IS) sont reliées par des cadres étanches (14) ceinturant chaque embrasure (37). Ces cadres (14) seront positionnés entre les plaques (1) et (2) en même temps que les colonnes (4).

Chaque ouverture dans les plaques correspondant aux embrasures (37), est ceinturée par une bordure (7) dont les rives ne sont pas relevées. Un renflement périphérique (8) obtenu par emboutissage, en regard des deux rainures (15) pratiquées dans les cadres (14), fait que les plaques ne sont pas planes autour des embrasures.

Les bordures (7) sont pressées par des mâchoires (16) sur le cadre (14) par des vis (non représentées). Une pellicule d'étanchéité en métal ductile, en plomb ou en élastomère (18) sera placée entre les bordures (7) et le cadre (14), rendant l'assemblage étanche.

Le renflement (8) de la bordure (7) et la rainure (15) symétrique au renflement, rendent possible le stockage d'un joint en mastic (17) à texture plastique. Un graisseur (13) sera fixé sur chaque joint périphérique afin d'injecter du mastic (17) sous pression.

Les cadres (14) sont composés d'une matière thermo-isolante et étanche. Les cadres (14) et les blocs-baies (27) sont avantageusement moulés d'une seule pièce. Cette pièce peut être composée de polyester-fibres de verre surmoulé sur un châssis en matériau léger. Mais le polyester offre une perméation aux gaz absente avec un métal.

Le volume fermé et étanche aux gaz, délimité par les plaques (1) et (2) et les cadres (14), est soumis à un vide poussé, inférieur à 1 hPa. La mise sous vide complète de gaz se fera quand les molécules de gaz enfermées dans les matériaux seront extraites.

C'est pourquoi le volume interne de la coque est relié à une pompe à vide (3) de façon permanente. Un seul orifice de prise de vide (22), est nécessaire et suffisant pour faire le vide dans la totalité de la coque.

La qualité optimale de l'isolation thermique sera maintenue durant toute la durée de vie du bâtiment grâce à la pompe à vide (3).

Les plaques rigides (1) et (2) sont avantageusement composées d'un métal. Les nervures (9) sont constituées par le prolongement ou excroissance des pyramides (11). Les segments de nervure [10] sont composés d'un profilé en T et fixés par soudage sur les plaques.

L'emboutissage et le pliage des plaques (1) et (2) nécessiteraient des machines de production conséquentes si l'on voulait réaliser les opérations d'emboutissage sur de grandes plaques ayant la taille des parois. C'est pourquoi les plaques sont divisées en profilés assemblés par des soudures étanches (25). Chaque profilé (26) est composé d'une unique rangée de pyramides concaves (11) et convexes (43). Ce profilé sera obtenu par profilage d'une tôle suivant le profil (26) et par contre-pliage et emboutissage après le profilage et permettant d'obtenir une succession de pyramides alternativement inversées. A titre d'exemple, un profilé peut avoir une largeur sur ses flancs (31) de 500 mm.

Il est plus économique de réunir les différents profilés (26) qui constitueront une plaque (1) ou (2), par soudage laser ou par brasage, que d'avoir une plaque constituée d'une seule tôle. De plus, ce procédé de fabrication permet plus de souplesse quant à la création de plaques de dimensions variées adaptées à la demande.

Des plaques (1) et (2) de grandes dimensions pourront être réalisées dans la limite des capacités des transports routiers et maritimes par conteneurs.

Les colonnes (4) cylindriques sont constituées de verre cellulaire, elles sont moulées dans des moules cylindriques ou bien extrudées sous forme d'une barre ronde continue sectionnée et usinée. Afin d'en augmenter la résistance à la compression, le verre sera moins expansé que le verre cellulaire destiné à l'isolation thermique.

Les colonnes peuvent également être constituées de fibres de bois ou de fibres végétales comprimées à 350 bars. La surface extérieure de ces colonnes sera imbibée d'une couche de polyester (39). La compression de fabrication de 350 bars garantira aux colonnes une stabilité dimensionnelle sous la pression des plaques (1) et (2).

Tous les matériaux isolants, rigides et durs peuvent être employés pour la fabrication des colonnes cylindriques (4).

Les nervures (9) et [10] permettent la pose de tous les panneaux de doublage (38), de parement et de panneaux photo-voltaïques. Les perforations oblongues (32) ou glissières des ailes (24) permettent le montage des panneaux par simple emboîtement et glissement des têtes de vis (41) qui seront positionnées en usine au dos des panneaux (38).

De plus, les panneaux (38) peuvent se dilater ou se rétracter sous l'action de variations de la température sans aucun problème.

L'espace entre les panneaux de doublage et les plaques (1) et (2) permet le passage des circuits d'eau, d'électricité, de ventilation et des réseaux intranet et internet en passant par les lumières (33) pratiquées à l'emporte-pièce dans les nervures (9) et (10). Cet espace permet la ventilation de la couverture du bâtiment.

### Montage d'un bâtiment

Afin de faciliter le montage de la coque, les plaques (1) et (2), les colonnes (4), les cadres (14) ainsi que les blocs-baies et les fenêtres et portes seront pré-assemblés en usine.
Les avantages sont les suivants :
- Les colonnes (4) n'ont pas besoin d'être fixées, leur serrage entre les plaques à l'aide des emboîtements des extrémités à facettes (28) dans les jonctions des coins des pyramides (11) et (43) suffit à les maintenir en place.
- Les opérations de placement des nombreuses colonnes (4) pourront être effectuées plaques horizontales en usine. Les colonnes de verre cellulaire, plus coûteuses, seront réparties dans les parois en contact avec l'extérieur et nécessitant une isolation parfaite. Les colonnes en fibres de bois seront réparties dans l'assise du bâtiment.
- Des parois « sandwichs » pré-assemblées complètes pourront être montées sur le lieu d'implantation du bâtiment. Seuls les serrages des bordures (5) et (6) et l'assemblage des chaînages (9) et [10] avec les platines (23) seront à effectuer.

Pour cela les plaques (1) et (2) doivent être reliées ensemble par des liens les moins conducteurs possibles de flux thermiques afin de limiter les ponts thermiques. Des câbles multibrins en fils de polyamide sont adaptés pour cela. Les câbles (19) seront enfilés en zigzag alternativement sur les plaques (1) et (2) dans des anneaux [20] soudés par points sur les sommets des pyramides concaves (11) ou également dans les creux des pyramides convexes (43). Le soudage dans les creux permet d'augmenter la longueur des câbles et donc d'augmenter leur isolation. La tension des câbles permettra de rapprocher les plaques (1) et (2) entre elles et de constituer des éléments pré-assemblés.

Un arrêt de câble pourra être prévu dans chaque anneau d'ancrage [20] améliorant ainsi le contreventement des parois.

Les plans de joint des bordures (5) des plaques (2) et les plans de joint des bordures (6) des plaques (1) doivent être orientés du même côté de la coque, décalés de part et d'autre d'une ligne (21) orthogonale aux plaques et accessibles par l'extérieur de la coque.

Les conditions sont identiques quand les plaques (2) ont des bordures (6) et les plaques (1) ont une bordure (5).

Les bâtiments seront simplement posés sur un sol égalisé, éventuellement sur une couche de sable si la zone est sismique.

Si la zone d'habitation est inondable, les bâtiments seront ou bien étanches grâce à des portes étanches jusqu'au niveau de la plus haute crue historiquement constatée, ou bien flottants grâce à des vides sanitaires (34) étanches et fermés dont la hauteur dépendra de la masse du bâtiment et qui serviront de flotteurs.

Le montage des panneaux de parement et de doublage (38) par simple emboîtements dans les glissières (32) permet un montage et un démontage rapide.

Les bâtiments sont modulables par ajout ou retrait d'éléments. Les éléments d'une maison individuelle peuvent être récupérés pour un immeuble collectif et vice versa.

**Nomenclature**

| OS (outer skin) Peau externe et Volume global | | | |
|---|---|---|---|
| IS (inner skin) Peau interne et Sous-volume | | | |
| 1- | Plaque extérieure | 23- | Platine |
| 2- | Plaque intérieure | 24- | Aile profilé en T |
| 3- | Pompe à vide | 25- | Soudure |
| 4- | Colonne | 26- | Profilé |
| 5- | Bordure en V fermé | 27- | Bloc-baie |
| 6- | Bordure en V ouvert | 28- | Extrémité à facettes |
| 7- | Bordure plate | 29- | Pince en U |
| 8- | Renflement | 30- | Regard |
| 9- | Nervure en T | 31- | Flanc |
| 10- | Segment de nervure | 32- | Perforation oblongue |
| 11- | Pyramide concave | 33- | Lumière |
| 12- | Mâchoire | 34- | Vide sanitaire/sous-sol |
| 13- | Graisseur | 35- | Muret |
| 14- | Cadre | 36- | Terre |
| 15- | Rainure de cadre | 37- | Embrasure |
| 16- | Mâchoire bordure plate | 38- | Panneau de doublage |
| 17- | Mastic | 39- | Couche de polyester |
| 18- | Pellicule plomb | 40- | Verre cellulaire |
| 19- | Câble | 41- | Tête de vis |
| 20- | Anneau d'ancrage | 42- | Épaulement linéaire |
| 21- | Ligne fictive | 43- | Pyramide convexe |
| 22- | Orifice prise de vide | | |

## Revendications

1. Coque de bâtiment composée d'un volume global (OS) constitué d'une pluralité de plaques rigides jointives formant une peau externe étanche qui englobe tout le bâtiment et composée de sous-volumes (IS) du volume global (OS) ou pièces d'habitation ou d'accueil, également constitués d'une pluralité de plaques rigides jointives formant une ou des peaux internes étanches ; cette coque de bâtiment est
**caractérisée en ce que** le volume complémentaire dudit ou desdits sous-volumes (IS) par rapport au dit volume global (OS) est mis sous vide de tout gaz, cette mise sous vide (3) permettant de rigidifier et de rendre isolante ladite coque, chaque sous-volume étant isolé physiquement, phoniquement et thermiquement, indépendamment des autres sous-volumes au sein du volume global.

2. Coque de bâtiment selon la revendication 1, **caractérisée en ce que** la peau externe de la coque et les parois des pièces d'habitation sont composées de plaques rigides (1) et (2) extrudées et/ou laminées et/ou moulées et/ou formées dans une matière stratifiée ou non, d'origine minérale et/ou végétale et/ou pétrochimique.

3. Coque de bâtiment selon la revendication 1, **caractérisée en ce qu'**à l'intérieur du volume complémentaire du ou des sous-volumes (IS) par rapport au volume global (OS), sont disposées à intervalles réguliers des colonnes (4) composées d'un matériau isolant, rigide et dur, entretoisant les plaques rigides jointives (1) dudit volume global (OS) et les plaques rigides jointives (2) dudit ou desdits sous-volumes (IS).

4. Coque de bâtiment selon la revendication 1 ou 3, **caractérisée en ce que** les colonnes (4), disposées à intervalles réguliers, sont avantageusement composées de verre cellulaire (40), sont ceinturées par une couche de polyester (39) armé de fibres de verre et entretoisent les plaques rigides jointives (1) dudit volume global (OS) et les plaques rigides jointives (2) dudit ou desdits sous-volumes (IS).

5. Coque de bâtiment selon l'une quelconque des revendications 1 à 4, **caractérisée en ce que** chaque embrasure (37) pratiquée dans le volume complémentaire du ou des sous-volumes (IS) par rapport au volume global (OS) est ceinturée par un cadre étanche aux gaz (14).

6. Coque de bâtiment selon l'une quelconque des revendications 1 à 5, **caractérisée en ce que** les plaques rigides jointives (1) et (2) et les cadres (14) forment une seule peau fermée grâce à leurs liaisons par leurs rives pliées et relevées suivant un angle à profil en V (5) et (6), les ouvertures pratiquées dans lesdites plaques (1) et (2) sont reliées aux cadres (14) par leurs rives non relevées (7), les bordures à angle en V fermé (5) sont destinées aux angles saillants formés entre deux plaques adjacentes, les bordures à angle en V ouvert (6) sont destinées aux angles rentrants formés entre deux plaques adjacentes.

7. Coque de bâtiment selon la revendications 6, **caractérisée en ce que** les paires de bordures (5) ou (6) comportent sur leur ligne médiane des renflements symétriques (8) en regard l'un de l'autre offrant un volume permettant de stocker un joint en mastic (17).

8. Coque de bâtiment selon la revendications 6, **caractérisée en ce que** entre les paires de bordures jointives (5) ou (6) ou (7) et (14) est inséré une pellicule métallique dont la ductilité élevée permettra d'obstruer à moindre frais les fuites résiduelles.

9. Coque de bâtiment selon la revendications 6, **caractérisée en ce que** chaque paire de renflements symétriques (8) en regard l'un de l'autre offrant un volume permettant de stocker un joint en mastic (17), comporte un système d'injection de mastic sous pression (13).

10. Coque de bâtiment selon l'une quelconque des revendications 1 à 9, **caractérisée en ce que** les plaques rigides (1) jointives composant la peau externe du bâtiment (OS), les plaques rigides (2) jointives composant les peaux internes (IS) des pièces d'habitation et les cadres (14) des embrasures (37) forment une seule peau étanche aux gaz.

11. Coque de bâtiment selon l'une quelconque des revendications 1 à 10, **caractérisée en ce que** le volume complémentaire du ou des sous-volumes (IS) par rapport au volume global (OS) est soumis à un vide de gaz inférieur à 1 hPa contrôlé par une pompe à vide (3) installée in situ de façon permanente, un seul orifice d'aspiration des gaz (22) est nécessaire et suffisant pour la totalité de la coque.

12. Coque de bâtiment selon l'une quelconque des revendications 1 à 11, **caractérisée en ce que** les plaques rigides (1) et (2) soumises à la pression atmosphérique sont avantageusement concaves entre chaque groupe de quatre colonnes contiguës (4), la concavité est créée par une pyramide (11) dont le sommet est orienté vers le volume soumis au vide de gaz.

13. Coque de bâtiment selon l'une quelconque des revendications 1 à 12, **caractérisée en ce que** deux côtés sur quatre des bases des pyramides (11) dont le sommet est orienté vers le volume soumis au vide de gaz, sont convexes et composés de quatre arêtes de deux pyramide (43) dont les sommets sont orientés vers l'extérieur du volume soumis au vide de gaz.

14. Coque de bâtiment selon l'une quelconque des revendications 1 à 13, **caractérisée en ce que** les plans de joint des bordures des plaques rigides (1) composant la peau externe du bâtiment et les plans de joint des bordures des plaques rigides (2) composant les peaux internes des pièces d'habitation sont orientés du même côté de la coque, sont décalés de part et d'autre d'une ligne fictive (21) orthogonale aux plaques et sont accessibles par l'extérieur de la coque sous vide de tout gaz.

15. Coque de bâtiment selon l'une quelconque des revendications 1 à 14, **caractérisée en ce qu'**elle est flottante en cas d'inondation si elle comporte des vides sanitaires ou sous-sol (34) formant des volumes étanches dont la hauteur est déterminée en fonction de la masse du bâtiment.
